# EUROPEAN PATENT SPECIFICATION

(11) **EP 2 863 699 B1**
(45) Date of publication and mention of the grant of the patent: **31.10.2018**
(21) Application number: 13807144.4
(22) Date of filing: 18.06.2013
(51) Int. Cl.: H04W 74/08, H04W 84/12, H04W 52/02

(54) **METHOD AND DEVICE FOR CONTROLLING CHANNEL ACCESS IN WIRELESS LAN SYSTEM**
VERFAHREN UND VORRICHTUNG ZUR STEUERUNG DES KANALZUGANGS IN EINEM WLAN-SYSTEM
PROCÉDÉ ET DISPOSITIF POUR CONTRÔLER UN ACCÈS MULTIPLE DANS UN SYSTÈME LAN SANS FIL

(30) Priority: 18.06.2012 US 201261660813 P; 24.08.2012 US 201261692712 P
(43) Date of publication of application: 22.04.2015
(73) Proprietor: LG Electronics Inc., Yeongdeungpo-gu Seoul 150-721 (KR)
(72) Inventor: SEOK, Yongho, Anyang-si Gyeonggi-do 431-080 (KR)
(74) Representative: Frenkel, Matthias Alexander
(86) International application number: PCT/KR2013/005353
(87) International publication number: WO 2013/191439

(56) References cited:
- EP-A1- 2 811 806
- WO-A1-2011/074761
- WO-A2-2010/104327
- WO-A2-2011/065746
- KR-A- 20090 089 420
- US-A1- 2007 171 858
- US-A1- 2010 040 033
- US-A1- 2010 165 963
- US-A1- 2011 305 216
- US-B2- 8 179 867
- LIWEN CHU (STMICROELECTRONICS): "Power efficient PS Poll ; 11-12-0342-01-00ah-power-efficient-ps-poll ", IEEE SA MENTOR; 11-12-0342-01-00AH-POWER-EFFICIENT-PS-POLL , IEEE-SA MENTOR, PISCATAWAY, NJ USA, vol. 802.11ah, no. 1, 14 May 2012 (2012-05-14), pages 1-6, XP068038672, [retrieved on 2012-05-14]
- ABUSUBAIH, M. ET AL.: 'A Framework for Interference Mitigation in Multi-BSS 802.11 Wireless LANs' PROCEEDINGS OF 10TH IEEE INTERNATIONAL SYMPOSIUM IN A WORLD OF WIRELESS, MOBILE AND MULTIMEDIA NETWORKS 19 June 2009, XP031543674

## Description

### [Technical Field]

The present invention relates to a wireless communication system, and more particularly to a method and apparatus for controlling channel access in a wireless LAN (WLAN) system.

### [Background Art]

Various wireless communication technologies systems have been developed with rapid development of information communication technologies. WLAN technology from among wireless communication technologies allows wireless Internet access at home or in enterprises or at a specific service provision region using mobile terminals, such as a Personal Digital Assistant (PDA), a laptop computer, a Portable Multimedia Player (PMP), etc. on the basis of Radio Frequency (RF) technology.

In order to obviate limited communication speed, one of the advantages of WLAN, the recent technical standard has proposed an evolved system capable of increasing the speed and reliability of a network while simultaneously extending a coverage region of a wireless network. For example, IEEE 802.11n enables a data processing speed to support a maximum high throughput (HT) of 540Mbps. In addition, Multiple Input and Multiple Output (MIMO) technology has recently been applied to both a transmitter and a receiver so as to minimize transmission errors as well as to optimize a data transfer rate.

US 20110305216 A1 discloses a method of controlling channel access in a WLAN system, comprising receiving, from an access point, a first channel access control message sent to stations located in some area through a directional antenna of the access point, and attempting to access a channel according to the first channel access control message. The method enables coexistence of several users and improves scalability of a wireless system.

US 20070171858 A1 discloses MAC transmission opportunity (TXOP) protection for multiple mode operation in a WLAN system. In particular, MAC mechanisms are defined to support multiple mode CTS frames, and multiple mode CF-End frames sent by the AP, each in a format appropriate for the corresponding mode which also applies to a single mode as a
trivial case. MAC mechanisms permit truncation of TXOP duration for releasing the unused portion of the TXOP when no further data for transmission is available. Release of unused protected TXOP is possible for both protected AP transmissions and STA transmissions.

US8179867 B2 discloses adjusting a TxOP in a mesh network in order not to be extended across a beacon reception timing. If a TXOP obtained by a transmitter mesh point, MP, collides with reserved timing information (beacon reception timing) of the receiver MP, the receiver MP can compulsively adjust the TXOP of the transmitter MP.

### [Disclosure]

### [Technical Problem]

Accordingly, the present invention is directed to a method and apparatus for transmitting and receiving a frame including a partial association identifier (PAID) in a WLAN system that substantially obviate one or more problems due to limitations and disadvantages of the related art. Machine to Machine (M2M) communication technology has been discussed as next generation communication technology. A technical standard for supporting M2M communication in IEEE 802.11 WLAN has been developed as IEEE 802.11ah. M2M communication may sometimes consider a scenario capable of communicating a small amount of data at low speed in an environment including a large number of devices.

An object of the present invention is to provide a method of controlling channel access by a device which is allowed not to check a beacon.

It is to be understood that technical objects to be achieved by the present invention are not limited to the aforementioned technical objects and other technical objects which are not mentioned herein will be apparent from the following description to one of ordinary skill in the art to which the present invention pertains.

### [Technical Solution]

The present invention is defined by the independent claims. Auxiliary embodiments are defined by the dependent claims.

The aspects of the present invention have the following common features.

When the duration of the TXOP overlaps the predetermined time set by the AP, a channel access control frame including information indicating a channel access allowance time of the STA may be transmitted by the AP as the second frame.

The first frame may be a request to send (RTS) frame. When the duration of the TXOP overlaps the predetermined time set by the AP, the AP may transmit a clear to send (CTS) frame as the second frame, and a duration field of the CTS frame is set to 0 or a value indicating a duration less than the duration of the TXOP.

After the CTS frame has been transmitted, the AP may transmit a channel access control frame including information indicating a channel access allowance time of the STA.

The predetermined time may include a target beacon transmission time (TBTT) or a restricted access window (RAW).

The first frame may be transmitted when a medium is determined to be in an idle state after the STA has changed from a doze state to an awake state.

The STA may operate as a non-traffic indication map (non-TIM) STA which is allowed not to check a beacon frame from the AP.

The STA may be indicated to operate as a TIM STA via a power management (PM) bit of the second frame.

It is to be understood that both the foregoing general description and the following detailed description of the present invention are exemplary and explanatory and are intended to provide further explanation of the invention as claimed.

### [Advantageous Effects]

According to the present invention, it is possible to provide a method of controlling channel access by a device which is allowed not to check a beacon.

It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

### [Description of Drawings]

The accompanying drawings, which are included to provide a further understanding of the invention, illustrate embodiments of the invention and together with the description serve to explain the principle of the invention.
FIG. 1 exemplarily shows an IEEE 802.11 system according to one embodiment of the present invention.
FIG. 2 exemplarily shows an IEEE 802.11 system according to another embodiment of the present invention.
FIG. 3 exemplarily shows an IEEE 802.11 system according to still another embodiment of the present invention.
FIG. 4 is a conceptual diagram illustrating a WLAN system.
FIG. 5 is a flowchart illustrating a link setup process for use in the WLAN system.
FIG. 6 is a conceptual diagram illustrating a backoff process.
FIG. 7 is a conceptual diagram illustrating a hidden node and an exposed node.
FIG. 8 is a conceptual diagram illustrating RTS (Request To Send) and CTS (Clear To Send).
FIG. 9 is a conceptual diagram illustrating a power management operation.
FIGS. 10 to 12 are conceptual diagrams illustrating detailed operations of a station (STA) having received a Traffic Indication Map (TIM).
FIG. 13 is a diagram illustrating a group based AID.
FIG. 14 is a diagram illustrating an example of TXOP truncation.
FIG. 15 is a diagram illustrating an example of TXOP truncation in a hidden node environment.
FIG. 16 is a diagram illustrating a method of controlling channel access according to an example of the present invention.
FIG. 17 is a diagram illustrating a method of controlling channel access according to another example of the present invention.
FIG. 18 is a diagram illustrating a method of controlling channel access according to another example of the present invention.
FIG. 19 is a flowchart illustrating a method of controlling channel access according to an example of the present invention
FIG. 20 is a block diagram showing the configuration of a wireless apparatus according to one embodiment of the present invention.

### [Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details.

The following embodiments are proposed by combining constituent components and characteristics of the present invention according to a predetermined format. The individual constituent components or characteristics should be considered optional factors on the condition that there is no additional remark. If required, the individual constituent components or characteristics may not be combined with other components or characteristics. In addition, some constituent components and/or characteristics may be combined to implement the embodiments of the present invention. The order of operations to be disclosed in the embodiments of the present invention may be changed. Some components or characteristics of any embodiment may also be included in other embodiments, or may be replaced with those of the other embodiments as necessary.

It should be noted that specific terms disclosed in the present invention are proposed for convenience of description and better understanding of the present invention, and the use of these specific terms may be changed to other formats within the technical scope of the present invention.

In some instances, well-known structures and devices are omitted in order to avoid obscuring the concepts of the present invention and important functions of the structures and devices are shown in block diagram form. The same reference numbers will be used throughout the drawings to refer to the same or like parts.

Exemplary embodiments of the present invention are supported by standard documents disclosed for at least one of wireless access systems including an Institute of Electrical and Electronics Engineers (IEEE) 802 system, a 3^{rd} Generation Partnership Project (3GPP) system, a 3GPP Long Term Evolution (LTE) system, an LTE-Advanced (LTE-A) system, and a 3GPP2 system. In particular, steps or parts, which are not described to clearly reveal the technical idea of the present invention, in the embodiments of the present invention may be supported by the above documents. All terminology used herein may be supported by at least one of the above-mentioned documents.

The following embodiments of the present invention can be applied to a variety of wireless access technologies, for example, CDMA (Code Division Multiple Access), FDMA (Frequency Division Multiple Access), TDMA (Time Division Multiple Access), OFDMA (Orthogonal Frequency Division Multiple Access), SC-FDMA (Single Carrier Frequency Division Multiple Access), and the like. CDMA may be embodied through wireless (or radio) technology such as UTRA (Universal Terrestrial Radio Access) or CDMA2000. TDMA may be embodied through wireless (or radio) technology such as GSM (Global System for Mobile communication)/GPRS (General Packet Radio Service)/EDGE (Enhanced Data Rates for GSM Evolution). OFDMA may be embodied through wireless (or radio) technology such as Institute of Electrical and Electronics Engineers (IEEE) 802.11 (Wi-Fi), IEEE 802.16 (WiMAX), IEEE 802-20, and E-UTRA (Evolved UTRA). For clarity, the following description focuses on IEEE 802.11 systems. However, technical features of the present invention are not limited thereto.

### WLAN system structure

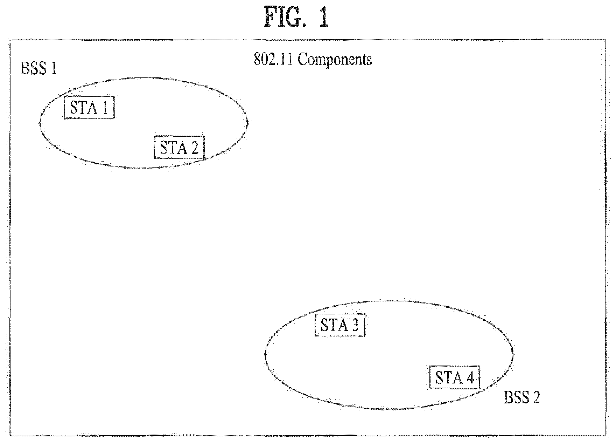

FIG. 1 exemplarily shows an IEEE 802.11 system according to one embodiment of the present invention.

The structure of the IEEE 802.11 system may include a plurality of components. A WLAN which supports transparent STA mobility for a higher layer may be provided by mutual operations of the components. A Basic Service Set (BSS) may correspond to a basic constituent block in an IEEE 802.11 LAN. In FIG. 1, two BSSs (BSS1 and BSS2) are shown and two STAs are included in each of the BSSs (i.e. STA1 and STA2 are included in BSS1 and STA3 and STA4 are included in BSS2). An ellipse indicating the BSS in FIG. 1 may be understood as a coverage area in which STAs included in the corresponding BSS maintain communication. This area may be referred to as a Basic Service Area (BSA). If an STA moves out of the BSA, the STA cannot directly communicate with the other STAs in the corresponding BSA.

In the IEEE 802.11 LAN, the most basic type of BSS is an Independent BSS (IBSS). For example, the IBSS may have a minimum form consisting of only two STAs. The BSS (BSS1 or BSS2) of FIG. 1, which is the simplest form and in which other components are omitted, may correspond to a typical example of the IBSS. Such configuration is possible when STAs can directly communicate with each other. Such a type of LAN is not prescheduled and may be configured when the LAN is necessary. This may be referred to as an ad-hoc network.

Memberships of an STA in the BSS may be dynamically changed when the STA is switched on or off or the STA enters or leaves the BSS region. The STA may use a synchronization process to join the BSS. To access all services of a BSS infrastructure, the STA should be associated with the BSS. Such association may be dynamically configured and may include use of a Distribution System Service (DSS).

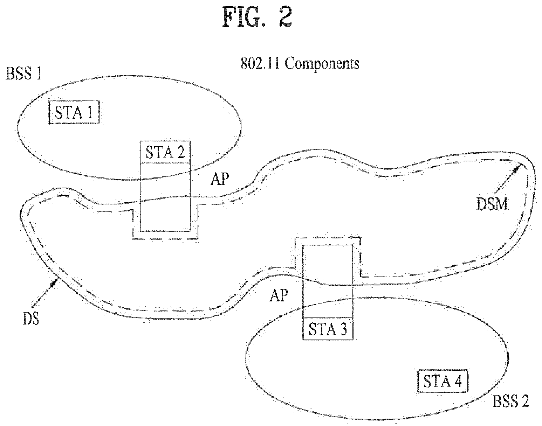

FIG. 2 is a diagram showing another exemplary structure of an IEEE 802.11 system to which the present invention is applicable. In FIG. 2, components such as a Distribution System (DS), a Distribution System Medium (DSM), and an Access Point (AP) are added to the structure of FIG. 1.

A direct STA-to-STA distance in a LAN may be restricted by Physical layer (PHY) performance. In some cases, such restriction of the distance may be sufficient for communication. However, in other cases, communication between STAs over a long distance may be necessary. The DS may be configured to support extended coverage.

The DS refers to a structure in which BSSs are connected to each other. Specifically, a BSS may be configured as a component of an extended form of a network consisting of a plurality of BSSs, instead of independent configuration as shown in FIG. 1.

The DS is a logical concept and may be specified by the characteristic of the DSM. In relation to this, a Wireless Medium (WM) and the DSM are logically distinguished in IEEE 802.11. Respective logical media are used for different purposes and are used by different components. In definition of IEEE 802.11, such media are not restricted to the same or different media. The flexibility of the IEEE 802.11 LAN architecture (DS architecture or other network architectures) can be explained in that a plurality of media is logically different. That is, the IEEE 802.11 LAN architecture can be variously implemented and may be independently specified by a physical characteristic of each implementation.

The DS may support mobile devices by providing seamless integration of multiple BSSs and providing logical services necessary for handling an address to a destination.

The AP refers to an entity that enables associated STAs to access the DS through a WM and that has STA functionality. Data may move between the BSS and the DS through the AP. For example, STA2 and STA3 shown in FIG. 2 have STA functionality and provide a function of causing associated STAs (STA1 and STA4) to access the DS. Moreover, since all APs correspond basically to STAs, all APs are addressable entities. An address used by an AP for communication on the WM need not always be identical to an address used by the AP for communication on the DSM.

Data transmitted from one of STAs associated with the AP to an STA address of the AP may always be received by an uncontrolled port and may be processed by an IEEE 802.1X port access entity. If the controlled port is authenticated, transmission data (or frame) may be transmitted to the DS.

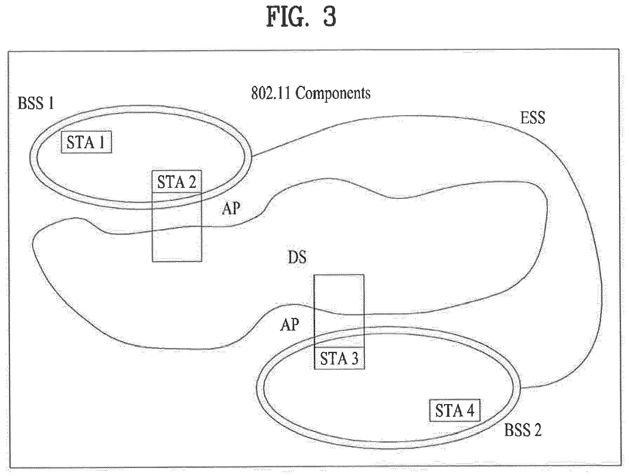

FIG. 3 is a diagram showing still another exemplary structure of an IEEE 802.11 system to which the present invention is applicable. In addition to the structure of FIG. 2, FIG. 3 conceptually shows an Extended Service Set (ESS) for providing wide coverage.

A wireless network having arbitrary size and complexity may be comprised of a DS and BSSs. In the IEEE 802.11 system, such a type of network is referred to an ESS network. The ESS may correspond to a set of BSSs connected to one DS. However, the ESS does not include the DS. The ESS network is characterized in that the ESS network appears as an IBSS network in a Logical Link Control (LLC) layer. STAs included in the ESS may communicate with each other and mobile STAs are movable transparently in LLC from one BSS to another BSS (within the same ESS).

In IEEE 802.11, relative physical locations of the BSSs in FIG. 3 are not assumed and the following forms are all possible. BSSs may partially overlap and this form is generally used to provide continuous coverage. BSSs may not be physically connected and the logical distances between BSSs have no limit. BSSs may be located at the same physical position and this form may be used to provide redundancy. One or more IBSSs or ESS networks may be physically located in the same space as one or more ESS networks. This may correspond to an ESS network form in the case in which an ad-hoc network operates in a location in which an ESS network is present, the case in which IEEE 802.11 networks of different organizations physically overlap, or the case in which two or more different access and security policies are necessary in the same location.

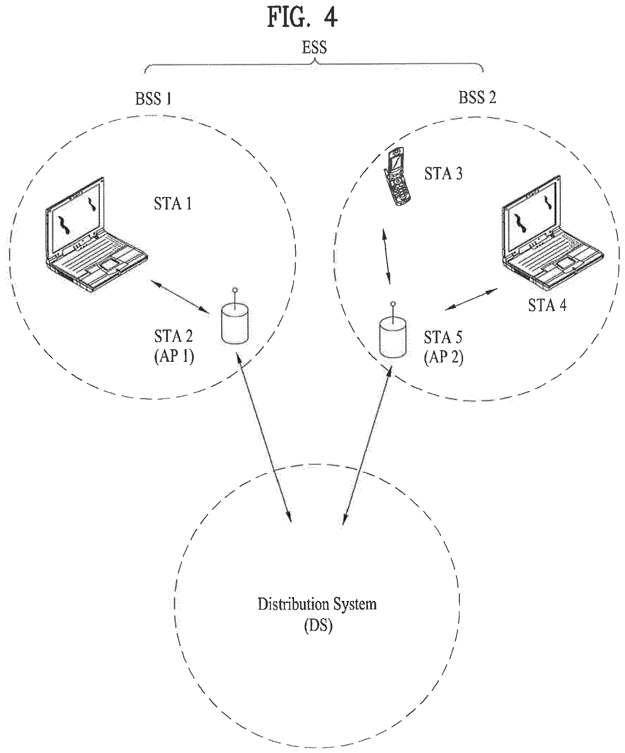

FIG. 4 is a diagram showing an exemplary structure of a WLAN system. In FIG. 4, an example of an infrastructure BSS including a DS is shown.

In the example of FIG. 4, BSS1 and BSS2 constitute an ESS. In the WLAN system, an STA is a device operating according to MAC/PHY regulation of IEEE 802.11. STAs include AP STAs and non-AP STAs. The non-AP STAs correspond to devices, such as laptop computers or mobile phones, handled directly by users. In FIG. 4, STA1, STA3, and STA4 correspond to the non-AP STAs and STA2 and STA5 correspond to AP STAs.

In the following description, the non-AP STA may be referred to as a terminal, a Wireless Transmit/Receive Unit (WTRU), a User Equipment (UE), a Mobile Station (MS), a mobile terminal, or a Mobile Subscriber Station (MSS). The AP is a concept corin response to a Base Station (BS), a Node-B, an evolved Node-B (e-NB), a Base Transceiver System (BTS), or a femto BS in other wireless communication fields.

### Link Setup Process

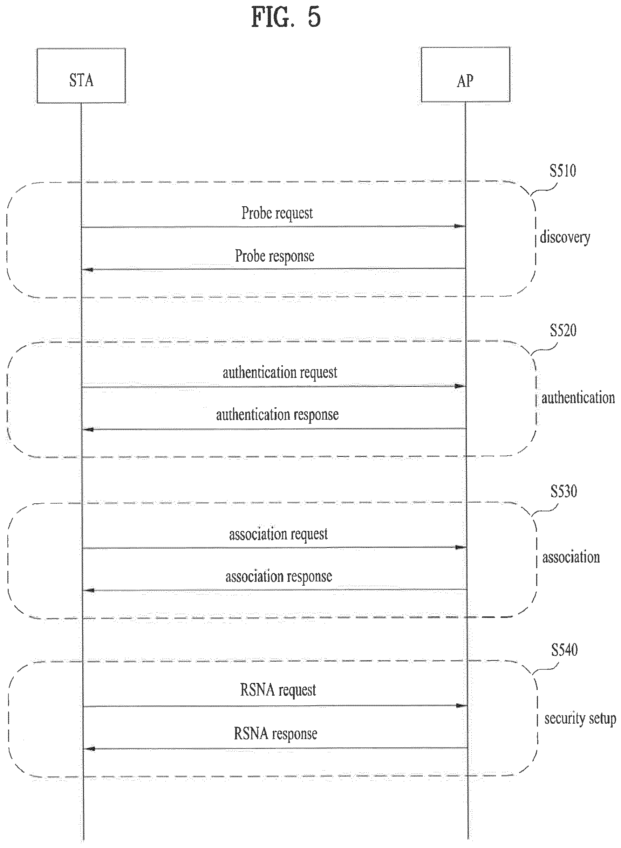

FIG. 5 is a flowchart explaining a general link setup process according to an exemplary embodiment of the present invention.

In order to allow an STA to establish link setup on the network as well as to transmit/receive data over the network, the STA must perform such link setup through processes of network discovery, authentication, and association, and must establish association and perform security authentication. The link setup process may also be referred to as a session initiation process or a session setup process. In addition, an association step is a generic term for discovery, authentication, association, and security setup steps of the link setup process.

Link setup process is described referring to Fig. 5.

In step S510, STA may perform the network discovery action. The network discovery action may include the STA scanning action. That is, STA must search for an available network so as to access the network. The STA must identify a compatible network before participating in a wireless network. Here, the process for identifying the network contained in a specific region is referred to as a scanning process.

The scanning scheme is classified into active scanning and passive scanning.

FIG. 5 is a flowchart illustrating a network discovery action including an active scanning process. In the case of the active scanning, an STA configured to perform scanning transmits a probe request frame and waits for a response to the probe request frame, such that the STA can move between channels and at the same time can determine which AP (Access Point) is present in a peripheral region. A responder transmits a probe response frame, acting as a response to the probe request frame, to the STA having transmitted the probe request frame. In this case, the responder may be an STA that has finally transmitted a beacon frame in a BSS of the scanned channel. In BSS, since the AP transmits the beacon frame, the AP operates as a responder. In IBSS, since STAs of the IBSS sequentially transmit the beacon frame, the responder is not constant. For example, the STA, that has transmitted the probe request frame at Channel #1 and has received the probe response frame at Channel #1, stores BSS-associated information contained in the received probe response frame, and moves to the next channel (for example, Channel #2), such that the STA may perform scanning using the same method (i.e., probe request/response transmission/reception at Channel #2).

Although not shown in FIG. 5, the scanning action may also be carried out using passive scanning. An STA configured to perform scanning in the passive scanning mode waits for a beacon frame while simultaneously moving from one channel to another channel. The beacon frame is one of management frames in IEEE 802.11, indicates the presence of a wireless network, enables the STA performing scanning to search for the wireless network, and is periodically transmitted in a manner that the STA can participate in the wireless network. In BSS, the AP is configured to periodically transmit the beacon frame. In IBSS, STAs of the IBSS are configured to sequentially transmit the beacon frame. If each STA for scanning receives the beacon frame, the STA stores BSS information contained in the beacon frame, and moves to another channel and records beacon frame information at each channel. The STA having received the beacon frame stores BSS-associated information contained in the received beacon frame, moves to the next channel, and thus performs scanning using the same method.

In comparison between the active scanning and the passive scanning, the active scanning is more advantageous than the passive scanning in terms of delay and power consumption.

After the STA discovers the network, the STA may perform the authentication process in step S520. The authentication process may be referred to as a first authentication process in such a manner that the authentication process can be clearly distinguished from the security setup process of step S540.

The authentication process may include transmitting an authentication request frame to an AP by the STA, and transmitting an authentication response frame to the STA by the AP in response to the authentication request frame. The authentication frame used for authentication request/response may correspond to a management frame.

The authentication frame may include an authentication algorithm number, an authentication transaction sequence number, a state code, a challenge text, a Robust Security Network (RSN), a Finite Cyclic Group (FCG), etc. The above-mentioned information contained in the authentication frame may correspond to some parts of information capable of being contained in the authentication request/response frame, may be replaced with other information, or may include additional information.

The STA may transmit the authentication request frame to the AP. The AP may decide whether to authenticate the corresponding STA on the basis of information contained in the received authentication request frame. The AP may provide the authentication result to the STA through the authentication response frame.

After the STA has been successfully authenticated, the association process may be carried out in step S530. The association process may involve transmitting an association request frame to the AP by the STA, and transmitting an association response frame to the STA by the AP in response to the association request frame.

For example, the association request frame may include information associated with various capabilities, a beacon listen interval, a Service Set Identifier (SSID), supported rates, supported channels, RSN, mobility domain, supported operating classes, a TIM (Traffic Indication Map) broadcast request, interworking service capability, etc.

For example, the association response frame may include information associated with various capabilities, a state code, an Association ID (AID), supported rates, an Enhanced Distributed Channel Access (EDCA) parameter set, a Received Channel Power Indicator (RCPI), a Received Signal to Noise Indicator (RSNI), mobility domain, a timeout interval (association comeback time), an overlapping BSS scan parameter, a TIM broadcast response, a QoS map, etc.

The above-mentioned information may correspond to some parts of information capable of being contained in the association request/response frame, may be replaced with other information, or may include additional information.

After the STA has been successfully associated with the network, a security setup process may be carried out in step S540. The security setup process of Step S540 may be referred to as an authentication process based on Robust Security Network Association (RSNA) request/response. The authentication process of step S520 may be referred to as a first authentication process, and the security setup process of Step S540 may also be simply referred to as an authentication process.

For example, the security setup process of Step S540 may include a private key setup process through 4-way handshaking based on an (Extensible Authentication Protocol over LAN (EAPOL) frame. In addition, the security setup process may also be carried out according to other security schemes not defined in IEEE 802.11 standards.

### WLAN evolution

In order to obviate limitations in WLAN communication speed, IEEE 802.11n has recently been established as a communication standard. IEEE 802.11n aims to increase network speed and reliability as well as to extend a coverage region of the wireless network. In more detail, IEEE 802.1 In supports a High Throughput (HT) of a maximum of 540Mbps, and is based on MIMO technology in which multiple antennas are mounted to each of a transmitter and a receiver.

With the widespread use of WLAN technology and diversification of WLAN applications, there is a need to develop a new WLAN system capable of supporting a HT higher than a data processing speed supported by IEEE 802.11n. The next generation WLAN system for supporting Very High Throughput (VHT) is the next version (for example, IEEE 802.11ac) of the IEEE 802.11n WLAN system, and is one of IEEE 802.11 WLAN systems recently proposed to support a data process speed of 1Gbps or more at a MAC SAP (Medium Access Control Service Access Point).

In order to efficiently utilize a radio frequency (RF) channel, the next generation WLAN system supports MU-MIMO (Multi User Multiple Input Multiple Output) transmission in which a plurality of STAs can simultaneously access a channel. In accordance with the MU-MIMO transmission scheme, the AP may simultaneously transmit packets to at least one MIMO-paired STA.

In addition, a technology for supporting WLAN system operations in whitespace has recently been discussed. For example, a technology for introducing the WLAN system in whitespace (TV WS) such as an idle frequency band (for example, 54∼698MHz band) left because of the transition to digital TV has been discussed under the IEEE 802.11af standard. However, the above-mentioned information is disclosed for illustrative purposes only, and the whitespace may be a licensed band capable of being primarily used only by a licensed user. The licensed user may be a user who has authority to use the licensed band, and may also be referred to as a licensed device, a primary user, an incumbent user, or the like.

For example, an AP and/or STA operating in the whitespace (WS) must provide a function for protecting the licensed user. For example, assuming that the licensed user such as a microphone has already used a specific WS channel acting as a divided frequency band on regulation in a manner that a specific bandwidth is occupied from the WS band, the AP and/or STA cannot use the frequency band corresponding to the corresponding WS channel so as to protect the licensed user. In addition, the AP and/or STA must stop using the corresponding frequency band under the condition that the licensed user uses a frequency band used for transmission and/or reception of a current frame.

Therefore, the AP and/or STA must determine whether to use a specific frequency band of the WS band. In other words, the AP and/or STA must determine the presence or absence of an incumbent user or a licensed user in the frequency band. The scheme for determining the presence or absence of the incumbent user in a specific frequency band is referred to as a spectrum sensing scheme. An energy detection scheme, a signature detection scheme and the like may be used as the spectrum sensing mechanism. The AP and/or STA may determine that the frequency band is being used by an incumbent user if the intensity of a received signal exceeds a predetermined value, or when a DTV preamble is detected.

M2M (Machine to Machine) communication technology has been discussed as next generation communication technology. Technical standard for supporting M2M communication has been developed as IEEE 802.11ah in the IEEE 802.11 WLAN system. M2M communication refers to a communication scheme including one or more machines, or may also be referred to as Machine Type Communication (MTC) or Machine To Machine (M2M) communication. In this case, the machine may be an entity that does not require direct handling and intervention of a user. For example, not only a meter or vending machine including a RF module, but also a user equipment (UE) (such as a smartphone) capable of performing communication by automatically accessing the network without user intervention/handling may be an example of such machines. M2M communication may include Device-to-Device (D2D) communication and communication between a device and an application server, etc. As exemplary communication between the device and the application server, communication between a vending machine and an application server, communication between the Point of Sale (POS) device and the application server, and communication between an electric meter, a gas meter or a water meter and the application server. M2M-based communication applications may include security, transportation, healthcare, etc. In the case of considering the above-mentioned application examples, M2M communication has to support the method for sometimes transmitting/receiving a small amount of data at low speed under an environment including a large number of devices.

In more detail, M2M communication must support a large number of STAs. Although the current WLAN system assumes that one AP is associated with a maximum of 2007 STAs, various methods for supporting other cases in which many more STAs (e.g., about 6000 STAs) are associated with one AP have recently been discussed in M2M communication. In addition, it is expected that many applications for supporting/requesting a low transfer rate are present in M2M communication. In order to smoothly support many STAs, the WLAN system may recognize the presence or absence of data to be transmitted to the STA on the basis of a TIM (Traffic Indication map), and various methods for reducing the bitmap size of the TIM have recently been discussed. In addition, it is expected that much traffic data having a very long transmission/reception interval is present in M2M communication. For example, in M2M communication, a very small amount of data (e.g., electric/gas/water metering) needs to be transmitted at long intervals (for example, every month). Therefore, although the number of STAs associated with one AP increases in the WLAN system, many developers and companies are conducting intensive research into an WLAN system which can efficiently support the case in which there are a very small number of STAs, each of which has a data frame to be received from the AP during one beacon period.

As described above, WLAN technology is rapidly developing, and not only the above-mentioned exemplary technologies but also other technologies such as a direct link setup, improvement of media streaming throughput, high-speed and/or support of large-scale initial session setup, and support of extended bandwidth and operation frequency, are being intensively developed.

### Medium Access Mechanism

In the IEEE 802.11 - based WLAN system, a basic access mechanism of MAC (Medium Access Control) is a Carrier Sense Multiple Access with Collision Avoidance (CSMA/CA) mechanism. The CSMA/CA mechanism is referred to as a Distributed Coordination Function (DCF) of IEEE 802.11 MAC, and basically includes a "Listen Before Talk" access mechanism. In accordance with the above-mentioned access mechanism, the AP and/or STA may perform Clear Channel Assessment (CCA) for sensing an RF channel or medium during a predetermined time interval [for example, DCF Inter-Frame Space (DIFS)], prior to data transmission. If it is determined that the medium is in the idle state, frame transmission through the corresponding medium begins. On the other hand, if it is determined that the medium is in the occupied state, the corresponding AP and/or STA does not start its own transmission, establishes a delay time (for example, a random backoff period) for medium access, and attempts to start frame transmission after waiting for a predetermined time. Through application of a random backoff period, it is expected that multiple STAs will attempt to start frame transmission after waiting for different times, resulting in minimum collision.

In addition, IEEE 802.11 MAC protocol provides a Hybrid Coordination Function (HCF). HCF is based on DCF and Point Coordination Function (PCF). PCF refers to the polling-based synchronous access scheme in which periodic polling is executed in a manner that all reception (Rx) APs and/or STAs can receive the data frame. In addition, HCF includes Enhanced Distributed Channel Access (EDCA) and HCF Controlled Channel Access (HCCA). EDCA is achieved when the access scheme provided from a provider to a plurality of users is contention-based. HCCA is achieved by the contention-free-based channel access scheme based on the polling mechanism. In addition, HCF includes a medium access mechanism for improving Quality of Service (QoS) of WLAN, and may transmit QoS data in both a Contention Period (CP) and a Contention Free Period (CFP).

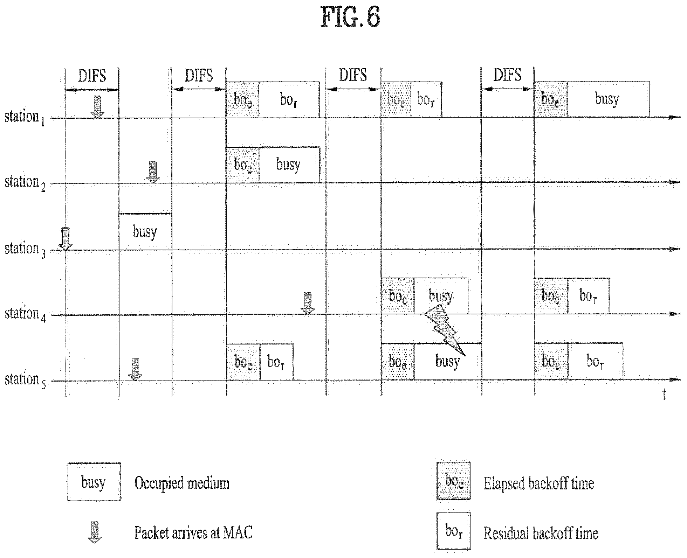

### FIG. 6 is a conceptual diagram illustrating a backoff process.

Operations based on a random backoff period will hereinafter be described with reference to FIG. 6. If the occupy- or busy- state medium is shifted to an idle state, several STAs may attempt to transmit data (or frame). As a method for implementing a minimum number of collisions, each STA selects a random backoff count, waits for a slot time corresponding to the selected backoff count, and then attempts to start data transmission. The random backoff count has a value of a pseudo-random integer, and may be set to one of 0 to CW values. In this case, CW refers to a Contention Window parameter value. Although an initial value of the CW parameter is denoted by CWmin, the initial value may be doubled in case of a transmission failure (for example, in the case in which ACK of the transmission frame is not received). If the CW parameter value is denoted by CWmax, CWmax is maintained until data transmission is successful, and at the same time it is possible to attempt to start data transmission. If data transmission was successful, the CW parameter value is reset to CWmin. Preferably, CW, CWmin, and CWmax are set to 2ⁿ-1 (where n=0, 1, 2, ...).

If the random backoff process starts operation, the STA continuously monitors the medium while counting down the backoff slot in response to the decided backoff count value. If the medium is monitored as the occupied state, the countdown stops and waits for a predetermined time. If the medium is in the idle state, the remaining countdown restarts.

As shown in the example of FIG. 6, if a packet to be transmitted to MAC of STA3 arrives at the STA3, the STA3 determines whether the medium is in the idle state during the DIFS, and may directly start frame transmission. In the meantime, the remaining STAs monitor whether the medium is in the busy state, and wait for a predetermined time. During the predetermined time, data to be transmitted may occur in each of STA1, STA2, and STA5. If the medium is in the idle state, each STA waits for the DIFS time and then performs countdown of the backoff slot in response to a random backoff count value selected by each STA. The example of FIG. 6 shows that STA2 selects the lowest backoff count value and STA1 selects the highest backoff count value. That is, after STA2 finishes backoff counting, the residual backoff time of STA5 at a frame transmission start time is shorter than the residual backoff time of STA1. Each of STA1 and STA5 temporarily stops countdown while STA2 occupies the medium, and waits for a predetermined time. If occupying of the STA2 is finished and the medium re-enters the idle state, each of STA1 and STA5 waits for a predetermined time DIFS, and restarts backoff counting. That is, after the remaining backoff slot as long as the residual backoff time is counted down, frame transmission may start operation. Since the residual backoff time of STA5 is shorter than that of STA1, STA5 starts frame transmission. Meanwhile, data to be transmitted may occur in STA4 while STA2 occupies the medium. In this case, if the medium is in the idle state, STA4 waits for the DIFS time, performs countdown in response to the random backoff count value selected by the STA4, and then starts frame transmission. FIG. 6 exemplarily shows the case in which the residual backoff time of STA5 is identical to the random backoff count value of STA4 by chance. In this case, an unexpected collision may occur between STA4 and STA5. If the collision occurs between STA4 and STA5, each of STA4 and STA5 does not receive ACK, resulting in the occurrence of a failure in data transmission. In this case, each of STA4 and STA5 increases the CW value two times, and STA4 or STA5 may select a random backoff count value and then perform countdown. Meanwhile, STA1 waits for a predetermined time while the medium is in the occupied state due to transmission of STA4 and STA5. In this case, if the medium is in the idle state, STA1 waits for the DIFS time, and then starts frame transmission after lapse of the residual backoff time.

### STA sensing operation

As described above, the CSMA/CA mechanism includes not only a physical carrier sensing mechanism in which the AP and/or STA can directly sense the medium, but also a virtual carrier sensing mechanism. The virtual carrier sensing mechanism can solve some problems (such as a hidden node problem) encountered in the medium access. For the virtual carrier sensing, MAC of the WLAN system can utilize a Network Allocation Vector (NAV). In more detail, by means of the NAV value, the AP and/or STA, each of which currently uses the medium or has authority to use the medium, may inform another AP and/or another STA for the remaining time in which the medium is available. Accordingly, the NAV value may correspond to a reserved time in which the medium will be used by the AP and/or STA configured to transmit the corresponding frame. An STA having received the NAV value may prohibit or defer medium access (or channel access) during the corresponding reserved time. For example, NAV may be set according to the value of a 'duration' field of the MAC header of the frame.

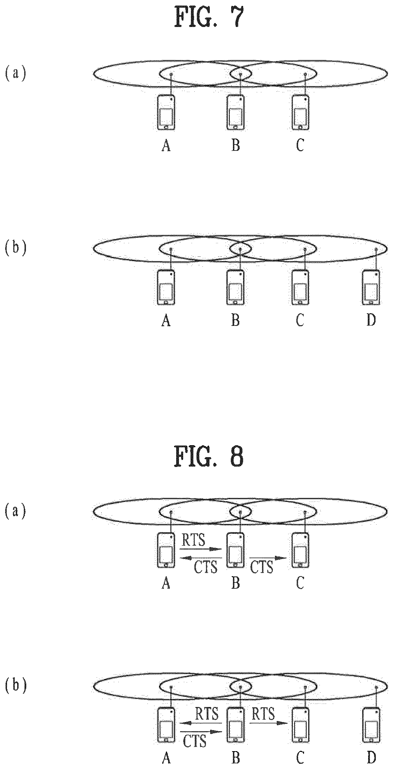

The robust collision detect mechanism has been proposed to reduce the probability of such collision, and as such a detailed description thereof will hereinafter be described with reference to FIGS. 7 and 8. Although an actual carrier sensing range is different from a transmission range, it is assumed that the actual carrier sensing range is identical to the transmission range for convenience of description and better understanding of the present invention.

FIG. 7 is a conceptual diagram illustrating a hidden node and an exposed node.

FIG. 7(a) exemplarily shows the hidden node. In FIG. 7(a), STA A communicates with STA B, and STA C has information to be transmitted. In FIG. 7(a), STA C may determine that the medium is in the idle state when performing carrier sensing before transmitting data to STA B, under the condition that STA A transmits information to STA B. Since transmission of STA A (i.e., occupied medium) may not be detected at the location of STA C, it is determined that the medium is in the idle state. In this case, STA B simultaneously receives information of STA A and information of STA C, resulting in the occurrence of collision. Here, STA A may be considered as a hidden node of STA C.

FIG. 7(b) exemplarily shows an exposed node. In FIG. 7(b), under the condition that STA B transmits data to STA A, STA C has information to be transmitted to STA D. If STA C performs carrier sensing, it is determined that the medium is occupied due to transmission of STA B. Therefore, although STA C has information to be transmitted to STA D, the medium-occupied state is sensed, such that the STA C must wait for a predetermined time (i.e., standby mode) until the medium is in the idle state. However, since STA A is actually located out of the transmission range of STA C, transmission from STA C may not collide with transmission from STA B from the viewpoint of STA A, such that STA C unnecessarily enters the standby mode until STA B stops transmission. Here, STA C is referred to as an exposed node of STA B.

FIG. 8 is a conceptual diagram illustrating RTS (Request To Send) and CTS (Clear To Send).

In order to efficiently utilize the collision avoidance mechanism under the above-mentioned situation of FIG. 7, it is possible to use a short signaling packet such as RTS (request to send) and CTS (clear to send). RTS/CTS between two STAs may be overheared by peripheral STA(s), such that the peripheral STA(s) may consider whether information is communicated between the two STAs. For example, if STA to be used for data transmission transmits the RTS frame to the STA having received data, the STA having received data transmits the CTS frame to peripheral STAs, and may inform the peripheral STAs that the STA is going to receive data.

FIG. 8(a) exemplarily shows the method for solving problems of the hidden node. In FIG. 8(a), it is assumed that each of STA A and STA C is ready to transmit data to STA B. If STA A transmits RTS to STA B, STA B transmits CTS to each of STA A and STA C located in the vicinity of the STA B. As a result, STA C must wait for a predetermined time until STA A and STA B stop data transmission, such that collision is prevented from occurring.

FIG. 8(b) exemplarily shows the method for solving problems of the exposed node. STA C performs overhearing of RTS/CTS transmission between STA A and STA B, such that STA C may determine no collision although it transmits data to another STA (for example, STA D). That is, STA B transmits an RTS to all peripheral STAs, and only STA A having data to be actually transmitted can transmit a CTS. STA C receives only the RTS and does not receive the CTS of STA A, such that it can be recognized that STA A is located outside of the carrier sensing range of STA C.

### Power Management

As described above, the WLAN system has to perform channel sensing before STA performs data transmission/reception. The operation of always sensing the channel causes persistent power consumption of the STA. There is not much difference in power consumption between the reception (Rx) state and the transmission (Tx) state. Continuous maintenance of the Rx state may cause large load to a power-limited STA (i.e., STA operated by a battery). Therefore, if STA maintains the Rx standby mode so as to persistently sense the channel, power is inefficiently consumed without special advantages in terms of WLAN throughput. In order to solve the above-mentioned problem, the WLAN system supports a power management (PM) mode of the STA.

The PM mode of the STA is classified into an active mode and a Power Save (PS) mode. The STA is basically operated in the active mode. The STA operating in the active mode maintains an awake state. If the STA is in the awake state, the STA may normally operate such that it can perform frame transmission/reception, channel scanning, or the like. On the other hand, STA operating in the PS mode is configured to switch from the doze state to the awake state or vice versa. STA operating in the sleep state is operated with minimum power, and the STA does not perform frame transmission/reception and channel scanning.

The amount of power consumption is reduced in proportion to a specific time in which the STA stays in the sleep state, such that the STA operation time is increased in response to the reduced power consumption. However, it is impossible to transmit or receive the frame in the sleep state, such that the STA cannot mandatorily operate for a long period of time. If there is a frame to be transmitted to the AP, the STA operating in the sleep state is switched to the awake state, such that it can transmit/receive the frame in the awake state. On the other hand, if the AP has a frame to be transmitted to the STA, the sleep-state STA is unable to receive the frame and cannot recognize the presence of a frame to be received. Accordingly, STA may need to switch to the awake state according to a specific period in order to recognize the presence or absence of a frame to be transmitted to the STA (or in order to receive a signal indicating the presence of the frame on the assumption that the presence of the frame to be transmitted to the STA is decided).

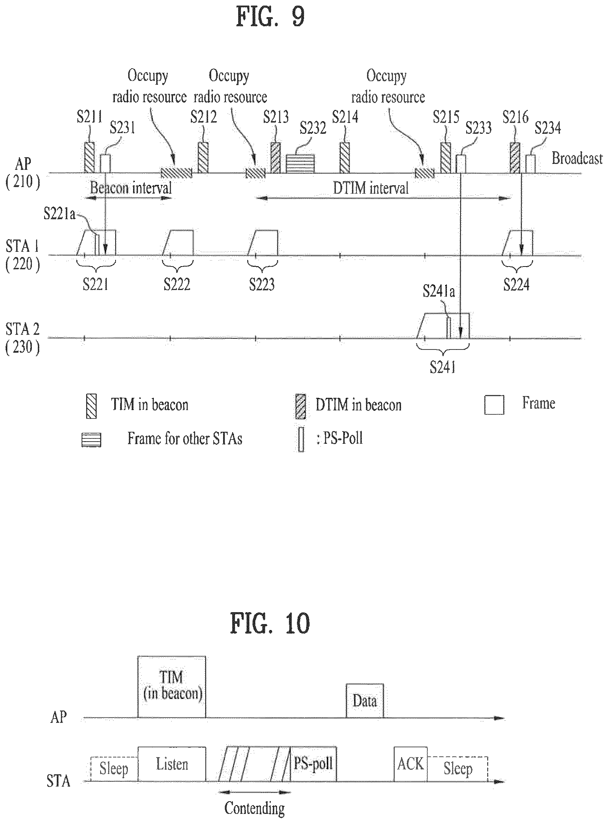

FIG. 9 is a conceptual diagram illustrating a power management (PM) operation.

Referring to FIG. 9, AP 210 transmits a beacon frame to STAs present in the BSS at intervals of a predetermined time period in steps (S211, S212, S213, S214, S215, S216). The beacon frame includes a TIM information element. The TIM information element includes buffered traffic regarding STAs associated with the AP 210, and includes specific information indicating that a frame is to be transmitted. The TIM information element includes a TIM for indicating a unicast frame and a Delivery Traffic Indication Map (DTIM) for indicating a multicast or broadcast frame.

AP 210 may transmit a DTIM once whenever the beacon frame is transmitted three times. Each of STA1 220 and STA2 222 is operated in the PS mode. Each of STA1 220 and STA2 222 is switched from the sleep state to the awake state every wakeup interval, such that STA1 220 and STA2 222 may be configured to receive the TIM information element transmitted by the AP 210. Each STA may calculate a switching start time at which each STA may start switching to the awake state on the basis of its own local clock. In FIG. 9, it is assumed that a clock of the STA is identical to a clock of the AP.

For example, the predetermined wakeup interval may be configured in such a manner that STA1 220 can switch to the awake state to receive the TIM element every beacon interval. Accordingly, STA1 220 may switch to the awake state in step S221 when AP 210 first transmits the beacon frame in step S211. STA1 220 receives the beacon frame, and obtains the TIM information element. If the obtained TIM element indicates the presence of a frame to be transmitted to STA1 220, STA1 220 may transmit a Power Save-Poll (PS-Poll) frame, which requests the AP 210 to transmit the frame, to the AP 210 in step S221a. The AP 210 may transmit the frame to STA 1 220 in response to the PS-Poll frame in step S231. STA1 220 having received the frame is re-switched to the sleep state, and operates in the sleep state.

When AP 210 secondly transmits the beacon frame, a busy medium state in which the medium is accessed by another device is obtained, the AP 210 may not transmit the beacon frame at an accurate beacon interval and may transmit the beacon frame at a delayed time in step S212. In this case, although STA1 220 is switched to the awake state in response to the beacon interval, it does not receive the delay-transmitted beacon frame so that it re-enters the sleep state in step S222.

When AP 210 thirdly transmits the beacon frame, the corresponding beacon frame may include a TIM element denoted by DTIM. However, since the busy medium state is given, AP 210 transmits the beacon frame at a delayed time in step S213. STA1 220 is switched to the awake state in response to the beacon interval, and may obtain a DTIM through the beacon frame transmitted by the AP 210. It is assumed that DTIM obtained by STA1 220 does not have a frame to be transmitted to STA1 220 and there is a frame for another STA. In this case, STA1 220 confirms the absence of a frame to be received in the STA1 220, and re-enters the sleep state, such that the STA1 220 may operate in the sleep state. After the AP 210 transmits the beacon frame, the AP 210 transmits the frame to the corresponding STA in step S232.

AP 210 fourthly transmits the beacon frame in step S214. However, it is impossible for STA1 220 to obtain information regarding the presence of buffered traffic associated with the STA1 220 through double reception of a TIM element, such that the STA1 220 may adjust the wakeup interval for receiving the TIM element. Alternatively, provided that signaling information for coordination of the wakeup interval value of STA1 220 is contained in the beacon frame transmitted by AP 210, the wakeup interval value of the STA1 220 may be adjusted. In this example, STA1 220, that has been switched to receive a TIM element every beacon interval, may be switched to another operation state in which STA1 220 can awake from the sleep state once every three beacon intervals. Therefore, when AP 210 transmits a fourth beacon frame in step S214 and transmits a fifth beacon frame in step S215, STA1 220 maintains the sleep state such that it cannot obtain the corresponding TIM element.

When AP 210 sixthly transmits the beacon frame in step S216, STA1 220 is switched to the awake state and operates in the awake state, such that the STA1 220 is unable to obtain the TIM element contained in the beacon frame in step S224. The TIM element is a DTIM indicating the presence of a broadcast frame, such that STA1 220 does not transmit the PS-Poll frame to the AP 210 and may receive a broadcast frame transmitted by the AP 210 in step S234. In the meantime, the wakeup interval of STA2 230 may be longer than a wakeup interval of STA1 220. Accordingly, STA2 230 enters the awake state at a specific time S215 where the AP 210 fifthly transmits the beacon frame, such that the STA2 230 may receive the TIM element in step S241. STA2 230 recognizes the presence of a frame to be transmitted to the STA2 230 through the TIM element, and transmits the PS-Poll frame to the AP 210 so as to request frame transmission in step S241a. AP 210 may transmit the frame to STA2 230 in response to the PS-Poll frame in step S233.

In order to operate/manage the power save (PS) mode shown in FIG. 9, the TIM element may include either a TIM indicating the presence or absence of a frame to be transmitted to the STA, or a DTIM indicating the presence or absence of a broadcast/multicast frame. DTIM may be implemented through field setting of the TIM element.

FIGS. 10 to 12 are conceptual diagrams illustrating detailed operations of the STA having received a Traffic Indication Map (TIM).

Referring to FIG. 10, STA is switched from the sleep state to the awake state so as to receive the beacon frame including a TIM from the AP. STA interprets the received TIM element such that it can recognize the presence or absence of buffered traffic to be transmitted to the STA. After STA contends with other STAs to access the medium for PS-Poll frame transmission, the STA may transmit the PS-Poll frame for requesting data frame transmission to the AP. The AP having received the PS-Poll frame transmitted by the STA may transmit the frame to the STA. STA may receive a data frame and then transmit an ACK frame to the AP in response to the received data frame. Thereafter, the STA may reenter the sleep state.

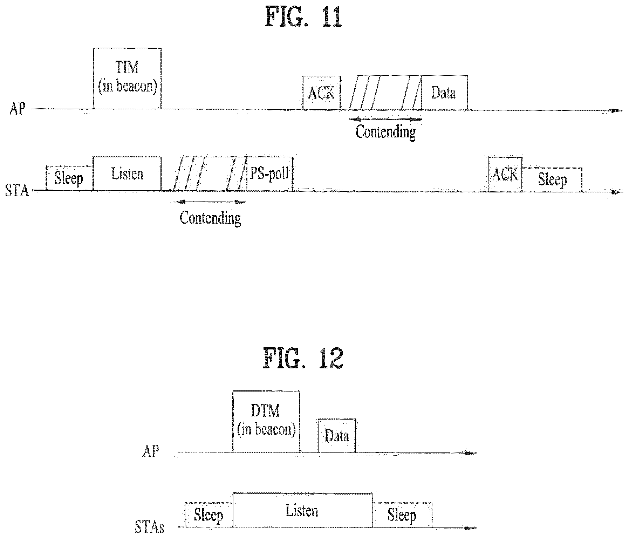

As can be seen from FIG. 10, the AP may operate according to the immediate response scheme, such that the AP receives the PS-Poll frame from the STA and transmits the data frame after lapse of a predetermined time [for example, Short Inter-Frame Space (SIFS)]. In contrast, the AP having received the PS-Poll frame does not prepare a data frame to be transmitted to the STA during the SIFS time, such that the AP may operate according to the deferred response scheme, and as such a detailed description thereof will hereinafter be described with reference to FIG. 11.

The STA operations of FIG. 11 in which the STA is switched from the sleep state to the awake state, receives a TIM from the AP, and transmits the PS-Poll frame to the AP through contention are identical to those of FIG. 10. If the AP having received the PS-Poll frame does not prepare a data frame during the SIFS time, the AP may transmit the ACK frame to the STA instead of transmitting the data frame. If the data frame is prepared after transmission of the ACK frame, the AP may transmit the data frame to the STA after completion of such contending. STA may transmit the ACK frame indicating successful reception of a data frame to the AP, and may be shifted to the sleep state.

FIG. 12 shows the exemplary case in which AP transmits DTIM. STAs may be switched from the sleep state to the awake state so as to receive the beacon frame including a DTIM element from the AP. STAs may recognize that multicast/broadcast frame(s) will be transmitted through the received DTIM. After transmission of the beacon frame including the DTIM, AP may directly transmit data (i.e., multicast/broadcast frame) without transmitting/receiving the PS-Poll frame. While STAs continuously maintains the awake state after reception of the beacon frame including the DTIM, the STAs may receive data, and then switch to the sleep state after completion of data reception.

### TIM structure

In the operation and management method of the Power save (PS) mode based on the TIM (or DTIM) protocol shown in FIGS. 9 to 12, STAs may determine the presence or absence of a data frame to be transmitted for the STAs through STA identification information contained in the TIM element. STA identification information may be specific information associated with an Association Identifier (AID) to be allocated when an STA is associated with an AP.

AID is used as a unique ID of each STA within one BSS. For example, AID for use in the current WLAN system may be allocated to one of 1 to 2007. In the case of the current WLAN system, 14 bits for AID may be allocated to a frame transmitted by AP and/or STA. Although the AID value may be assigned a maximum of 16383, the values of 2008 ∼ 16383 are set to reserved values.

The TIM element according to legacy definition is inappropriate for application of M2M application through which many STAs (for example, at least 2007 STAs) are associated with one AP. If the conventional TIM structure is extended without any change, the TIM bitmap size excessively increases, such that it is impossible to support the extended TIM structure using the legacy frame format, and the extended TIM structure is inappropriate for M2M communication in which application of a low transfer rate is considered. In addition, it is expected that there are a very small number of STAs each having an Rx data frame during one beacon period. Therefore, according to exemplary application of the above-mentioned M2M communication, it is expected that the TIM bitmap size is increased and most bits are set to zero (0), such that there is needed a technology capable of efficiently compressing such bitmap.

In the legacy bitmap compression technology, successive values (each of which is set to zero) of 0 are omitted from a head part of bitmap, and the omitted result may be defined as an offset (or start point) value. However, although STAs each including the buffered frame is small in number, if there is a high difference between AID values of respective STAs, compression efficiency is not high. For example, assuming that the frame to be transmitted to only a first STA having an AID of 10 and a second STA having an AID of 2000 is buffered, the length of a compressed bitmap is set to 1990, the remaining parts other than both edge parts are assigned zero (0). If STAs associated with one AP is small in number, inefficiency of bitmap compression does not cause serious problems. However, if the number of STAs associated with one AP increases, such inefficiency may deteriorate overall system throughput.

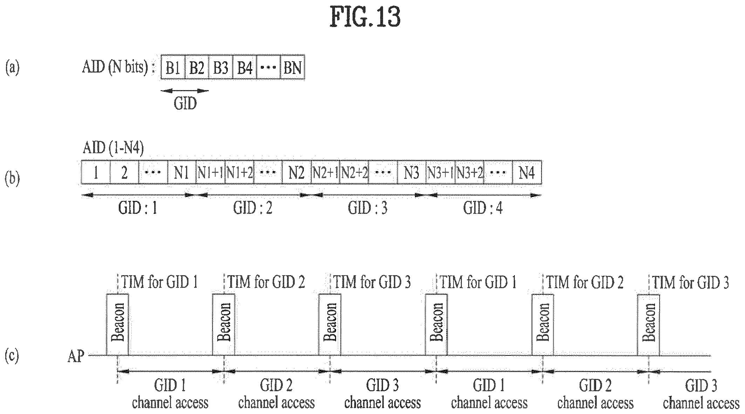

In order to solve the above-mentioned problems, AIDs are divided into a plurality of groups such that data can be more efficiently transmitted using the AIDs. A designated group ID (GID) is allocated to each group. AIDs allocated on the basis of such group will hereinafter be described with reference to FIG. 13.

FIG. 13(a) is a conceptual diagram illustrating a group-based AID. In FIG. 13(a), some bits located at the front part of the AID bitmap may be used to indicate a group ID (GID). For example, it is possible to designate four GIDs using the first two bits of an AID bitmap. If a total length of the AID bitmap is denoted by N bits, the first two bits (B1 and B2) may represent a GID of the corresponding AID.

FIG. 13(b) is a conceptual diagram illustrating a group-based AID. In FIG. 13(b), a GID may be allocated according to the position of AID. In this case, AIDs having the same GID may be represented by offset and length values. For example, if GID 1 is denoted by Offset A and Length B, this means that AIDs (A ∼ A+B-1) on bitmap are respectively set to GID 1. For example, FIG. 13(b) assumes that AIDs (1 ∼ N4) are divided into four groups. In this case, AIDs contained in GID 1 are denoted by 1 ∼ N1, and the AIDs contained in this group may be represented by Offset 1 and Length N1. AIDs contained in GID 2 may be represented by Offset (N1+1) and Length (N2-N1+1), AIDs contained in GID 3 may be represented by Offset (N2+1) and Length (N3-N2+1), and AIDs contained in GID 4 may be represented by Offset (N3+1) and Length (N4-N3+1).

In case of using the aforementioned group-based AIDs, channel accessg is allowed in a different time interval according to individual GIDs, the problem caused by the insufficient number of TIM elements compared with a large number of STAs can be solved and at the same time data can be efficiently transmitted/received. For example, during a specific time interval, channel access is allowed only for STA(s) corresponding to a specific group, and channel access to the remaining STA(s) may be restricted. A predetermined time interval in which access to only specific STA(s) is allowed may also be referred to as a Restricted Access Window (RAW).

Channel access based on GID will hereinafter be described with reference to FIG. 13(c). If AIDs are divided into three groups, the channel access mechanism according to the beacon interval is exemplarily shown in FIG. 13(c). A first beacon interval (or a first RAW) is a specific interval in which channel access to an STA corresponding to an AID contained in GID 1 is allowed, and channel access of STAs contained in other GIDs is
disallowed. For implementation of the above-mentioned structure, a TIM element used only for AIDs corresponding to GID 1 is contained in a first beacon frame. A TIM element used only for AIDs corresponding to GID 2 is contained in a second beacon frame. Accordingly, only channel access to an STA corresponding to the AID contained in GID 2 is allowed during a second beacon interval (or a second RAW) during a second beacon interval (or a second RAW). A TIM element used only for AIDs having GID 3 is contained in a third beacon frame, such that channel access to an STA corresponding to the AID contained in GID 3 is allowed using a third beacon interval (or a third RAW). A TIM element used only for AIDs each having GID 1 is contained in a fourth beacon frame, such that channel access to an STA corresponding to the AID contained in GID 1 is allowed using a fourth beacon interval (or a fourth RAW). Thereafter, only channel access to an STA corresponding to a specific group indicated by the TIM contained in the corresponding beacon frame may be allowed in each of beacon intervals subsequent to the fifth beacon interval (or in each of RAWs subsequent to the fifth RAW).

Although FIG. 13(c) exemplarily shows that the order of allowed GIDs is periodical or cyclical according to the beacon interval, the scope of the present invention is not limited thereto. That is, only AID(s) contained in specific GID(s) may be contained in a TIM element, such that channel access to STA(s) corresponding to the specific AID(s) is allowed during a specific time interval (for example, a specific RAW), and channel access to the remaining STA(s) is disallowed.

The aforementioned group-based AID allocation scheme may also be referred to as a hierarchical structure of a TIM. That is, a total AID space is divided into a plurality of blocks, and channel access to STA(s) (i.e., STA(s) of a specific group) corresponding to a specific block having any one of the remaining values other than '0' may be allowed. Therefore, a large-sized TIM is divided into small-sized blocks/groups, STA can easily maintain TIM information, and blocks/groups may be easily managed according to class, QoS or usage of the STA. Although FIG. 13 exemplarily shows a 2-level layer, a hierarchical TIM structure comprised of two or more levels may be configured. For example, a total AID space may be divided into a plurality of page groups, each page group may be divided into a plurality of blocks, and each block may be divided into a plurality of sub-blocks. In this case, according to the extended version of FIG. 13(a), first N1 bits of AID bitmap may represent a page ID (i.e., PID), the next N2 bits may represent a block ID, the next N3 bits may represent a sub-block ID, and the remaining bits may represent the position of STA bits contained in a sub-block.

In the examples of the present invention, various schemes for dividing STAs (or AIDs allocated to respective STAs) into predetermined hierarchical group units, and managing the divided result may be applied to the embodiments, however, the group-based AID allocation scheme is not limited to the above examples.

### U-APSD mechanism

According to an unscheduled-automatic power save delivery (U-APSD) mechanism, an STA may notify an AP of a requested transmission duration in order to use a U-APSD service period (SP) and the AP may transmit a frame to the STA during the SP. According to the U-APSD mechanism, the STA may simultaneously receive several PSDUs from the AP using the SP thereof.

The STA may recognize that there is data to be transmitted thereto by the AP via a TIM element of a beacon. Thereafter, the STA may transmit a trigger frame to the AP at a desired time and request the AP to transmit data while notifying the AP that the SP thereof starts. The AP may transmit ACK in response to the trigger frame. Thereafter, the AP may transmit an RTS to the STA via competition, receive a CTS frame from the STA and transmit data to the STA. Here, the data transmitted by the AP may be composed of one or more data frames. When the AP transmits a last data frame, if the data frame, an end of service period (EOSP) of which is set to 1, is transmitted, the STA may end the SP based on the EOSP. Thus, the STA may transmit ACK indicating successful data reception to the AP. According to the U-APSD mechanism, the STA may start the SP at a desired time to receive data and receive several data frames within one SP to more efficiently receive data.

### PPDU frame format

A Physical Layer Convergence Protocol(PLCP) Packet Data Unit (PPDU) frame format may include a Short Training Field (STF), a Long Training Field (LTF), a signal (SIG) field, and a data field. The most basic (for example, non-HT) PPDU frame format may be comprised of a Legacy-STF (L-STF) field, a Legacy-LTF (L-LTF) field, an SIG field, and a data field. In addition, the most basic PPDU frame format may further include additional fields (i.e., STF, LTF, and SIG fields) between the SIG field and the data field according to the PPDU frame format types (for example, HT-mixed format PPDU, HT-greenfield format PPDU, a VHT PPDU, and the like).

STF is a signal for signal detection, Automatic Gain Control (AGC), diversity selection, precise time synchronization, etc. LTF is a signal for channel estimation, frequency error estimation, etc. The sum of STF and LTF may be referred to as a PCLP preamble. The PLCP preamble may be referred to as a signal for synchronization and channel estimation of an OFDM physical layer.

The SIG field may include a RATE field, a LENGTH field, etc. The RATE field may include information regarding data modulation and coding rate. The LENGTH field may include information regarding the length of data. Furthermore, the SIG field may include a parity field, a SIG TAIL bit, etc.

The data field may include a service field, a PLCP Service Data Unit (PSDU), and a PPDU TAIL bit. If necessary, the data field may further include a padding bit. Some bits of the SERVICE field may be used to synchronize a descrambler of the receiver. PSDU may correspond to MAC PDU defined at MAC layer, and include data being generated/used by higher layer. PPDU TAIL bits may be used for return an encoder to a zero state. Padding bits may be used to match the length of the data field to a predetermined length.

MAC PDU is defined according to various MAC frame formats, and basic MAC frame may include MAC header, frame body, and FCS (Frame Check Sequence). MAC frame may be configured as MAC PDU, and be transmitted/received through PSDU of data portion of PPDU frame format.

On the other hand, a null-data packet (NDP) frame format may indicate a frame format having no data packet. That is, the NDP frame includes a PLCP header part (i.e., STF, LTF, and SIG fields) of a general PPDU format, whereas it does not include the remaining parts (i.e., the data field). The NDP frame may be referred to as a short frame format.

### TXOP truncation

If the STA capable of accessing a channel can empty its own transmission sequence using an EDCA, the residual time duration is enough for frame transmission, Contention Free (CF) - END frame can be transmitted. By transmission of the CF-END frame, the corresponding STA can explicitly represent the end of a Transmission Opportunity (TXOP) thereof. Here, TXOP may be defined as a time interval during which a specific STA has right to initiate frame exchanges, and may be configured by start timing and maximum duration value.

A TXOP holder configured to transmit the CF-END frame should not initiate the additional frame exchange sequence within a current TXOP.

A non-AP STA but not the TXOP holder must not transmit the CF-END frame.

The STA having received the CF-END frame may interpret the CF-END frame as a NAV reset. That is, the corresponding STA may reset the NAV timer to zero at the end time of a data unit (for example, PPDU) including the CF-END frame.

If the AP receives the CF-END frame having a BSSID identical to a BSSID of the AP, it transmits the CF-END frame after lapse of the SIFS time so as to answer the CF-END frame.

Transmission of a single CF-END frame by the TXOP holder may reset the NAV of the STA capable of listening to transmission of the corresponding TXOP holder. Whereas STAs cannot listen to the CF-END frame causing the NAV reset, there may be other STAs capable of listening to transmission of the TXOP respondent configured to reset the NAV. (For example, the situation of a hidden node). The STAs may prevent competition in medium before expiration of original NAV reservation.

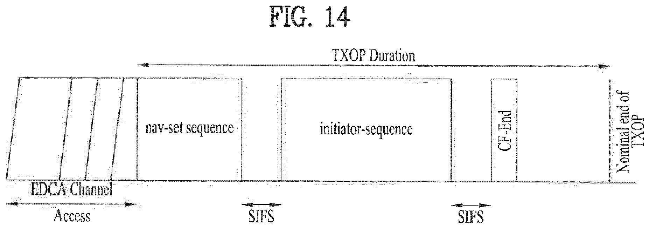

FIG. 14 is a conceptual diagram illustrating an example of TXOP truncation.

The STA can access the medium using the EDCA channel access. Thereafter, the STA can transmit the NAV setting sequence (e.g., RTS/CTS). After lapse of the SIFS time, the STA transmits the initiator sequence, so that transmission/reception of a plurality of PPDUs can be carried out between the TXOP holder and the TXOP respondent. At the end time of the PPDU transmission/reception sequence, if the TXOP holder does not have data appropriate for transmission within the corresponding TXOP, the TXOP holder STA transmits the CF-END frame so as to truncate the TXOP operation.

STAs having received the CF-END frame may reset their NAVs and can therefore initiate competition in medium without causing additional delay.

As described above, when the STA, which has acquired the TXOP, no longer has data to be transmitted, the TXOP may be truncated by broadcast of the CF-END frame by a holder (or an owner) of the TXOP. The STAs, which have received the CF-END frame, may reset the NAV and perform channel access (or channel competition) again after the CF-END frame.

As coverage serviced by a wireless LAN has increased (e.g., a wireless LAN system for providing a service in a range of 1 km or more), a hidden node may be frequently generated. In the hidden node situation, other STAs may not listen to the CF-END frame transmitted by the TXOP holder.

Accordingly, even when the TXOP holder transmits the CF-END frame to truncate the TXOP, some of the other STAs may defer transmission thereof while awaiting end of the current TXOP, not knowing that the TXOP is truncated.

In order to solve such a problem, the AP, which has received the CF-END frame transmitted by the TXOP holder, broadcasts the CF-END frame once more to notify the other STAs, which do not listen to the CF-END frame transmitted by the TXOP holder, of TXOP truncation. However, according to this method, overhead of the CF-END frame increases.

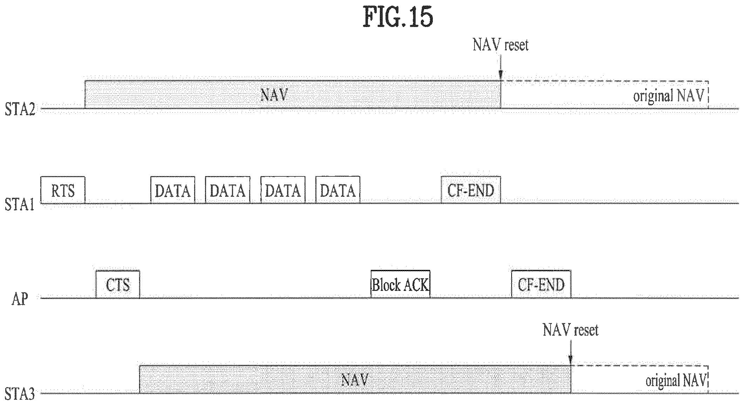

FIG. 15 is a diagram illustrating an example of TXOP truncation in a hidden node environment.

In the example of FIG. 15, assume that STA3 is a hidden node of STA1. That is, assume that STA2 listens to transmission of STA1 but STA3 does not listen to transmission of STA1.

STA1 may perform an NAV setting sequence (e.g., RTS/CTS transmission and reception) with an AP such that the other STAs may set an NAV. Here, STA2 may listen to an RTS of STA1, set an NAV based on a duration field, etc. of the RTS, and prohibit medium access (or channel access) during the set NAV period. STA3 may not listen to the RTS of STA1 but may listen to a CTS of the AP, thereby setting an NAV.

STA1 may become a TXOP holder and perform transmission and reception of a data frame to and from the AP. In the example of FIG. 15, STA1 may transmit a plurality of data frames during the TXOP and receive block ACK from the AP in response thereto. Here, the time length among the plurality of data frames may be an SIFS. In addition, the block ACK frame may be transmitted from the AP when the SIFS has elapsed after STA1 transmits a last data frame.

The block ACK mechanism is a method of simultaneously providing ACK via one block ACK frame in response to a plurality of MAC packet data units (MPDUs) without providing individual ACK with respect to each MPDU. The block ACK may include a block ACK bitmap and each bit of the bitmap may indicate reception success/failure of one MPDU.

When STA1, which has received the block ACK frame, no longer has data to be transmitted, STA1 may transmit the CF-END frame. In this case, STA2 may listen to the CF-END frame of STA1 to recognize that the TXOP of STA1 is truncated and reset the NAV. However, since STA3 does not listen to the CF-END frame of STA1, STA3 does not reset the NAV and await end of the TXOP. In order to solve this problem, the AP, which has received the CF-END frame of STA1, may broadcast the CF-END frame once more. Thus, STA3, which has listened to the CF-END frame from the AP, may recognize TXOP truncation and reset the NAV.

### TXOP truncation method of non-TIM STA

A general STA may notify the AP of presence thereof via management operation such as association or negotiation and may notify the AP of preference for downlink transmission. For example, indication and confirmation of such information may be performed via an association request/response process or probe request/response process between the STA and the AP.

Preference of the STA for downlink transmission may include one of a method of recognizing presence/absence of downlink data via a TIM and receiving downlink data based on the TIM or a method of receiving downlink data without the TIM. For example, an STA of a sensor, smart grid, M2M, Internet of Things or meter type (hereinafter, referred to as a sensor type STA) may be in a sleep mode during a long time with a period (e.g., one month) fixed according to the property of an application (e.g., gas metering report) and then wake up during a short time to perform channel access, in order to minimize power consumption.

The AP provides TIM information to the STA in order to enable the STA to perform channel access using time resources indicated by the TIM only to increase resource use efficiency. However, since downlink data transmitted to the sensor type STA is present during a very short time only, signaling overhead caused when the AP transmits the TIM information to the sensor type STA via every beacon may cause network resource use inefficiency. Accordingly, it is not necessary for the AP to notify the sensor type STA of the data buffering state while enduring TIM signaling overhead. An operation mode which is not based on the TIM may be referred to as a non-TIM mode and an operation mode which is based on the TIM may be referred to as a TIM mode. A non-TIM STA not receiving the TIM from the AP means that the non-TIM STA may operate without receiving a beacon from the AP. That is, an STA, which is allowed not to check a beacon frame, may be referred to as a non-TIM STA.

Since the non-TIM STA operates in a doze state during a very long time, errors are likely to occur in a time synchronization function (TSF) with the AP due to clock drift of a local clock of the non-TIM STA. When TSF errors occur between the STA and the AP for 100 ms or more, the STA may not accurately predict when the AP transmits the beacon (that is, a target beacon transmission time (TBTT). In consideration of this, the non-TIM STA operates without receiving the beacon.

The non-TIM STAs may not receive the beacon frame but may wake up at an arbitrary time and transmit a PS-Poll frame to the AP, thereby checking whether there is buffered data to be received thereby. In addition, the non-TIM STAs may wake up at an arbitrary time and transmit a trigger frame to the AP, thereby notifying the AP that a service period during which data can be received from the AP has started. In addition, the non-TIM STAs may wake up at an arbitrary time and transmit uplink data to the AP. A time when the non-TIM STAs wake up at an arbitrary time and transmit a PS-Poll frame, a trigger frame or an uplink data frame may overlap the TBTT when the AP transmits the beacon or an RAW allocated for another STA. In this case, reception of the beacon by other STAs may be interrupted or time durations restrictively allocated to other STAs may be intruded upon.

Accordingly, in the present invention, in order to solve this problem, a detailed method of truncating a TXOP if a TXOP duration overlaps a time set/allocated by the AP for a special purpose (e.g., a TBTT or RAW) when a non-TIM STA initiates the TXOP is proposed.

In the TXOP truncation method according to the present invention, when a non-TIM STA, which has been changed from a doze state to an awake state, performs medium synchronization via a CCA procedure (or determines that a medium is in an idle state via a CCA procedure) and then transmits a first frame to the AP and the AP transmits a second frame to the non-TIM STA in response thereto, if a time when the second frame is transmitted overlaps a time when a frame transmitted and received subsequently to the second frame is allocated by the AP for a special purpose (e.g., a TBTT or RAW), the second frame may not be transmitted or another frame may be transmitted instead of the second frame. The first frame may be a PS-Poll frame, a trigger frame or an uplink data frame, for example, and the second frame may be an ACK frame or a downlink data frame.

First, when a TIM STA transmits a PS-Poll frame, the AP may transmit a data frame to the STA after the SIFS (see FIG. 10) and, when a time is required to prepare the data frame at the AP, which has received the PS-Poll frame, the ACK frame may be transmitted after the SIFS and then the data frame may be transmitted (see FIG. 11).

### Embodiment 1

In order to describe a first example of the present invention, assume that, when a non-TIM STA, which has performed CCA, transmits a PS-Poll frame, the AP is ready to transmit data to the non-TIM STA.

In this case, the AP may determine whether a transmission time of a data frame overlaps a time allocated by the AP for a special purpose (e.g., a TBTT or RAW). If these times overlap each other, the data frame prepared by the AP may not be transmitted but, instead, an ACK frame may be transmitted to the non-TIM STA. The AP may notify the non-TIM STA that the AP has a buffered frame using a more data (MD) field of a frame control field of the transmitted ACK frame. For example, if the value of the MD field is set to 1, it may indicate that there is buffered data for the STA.

According to the conventional technology, the AP selectively transmits the ACK frame or the data frame depending on whether data to be transmitted is prepared, in response to the PS-Poll frame transmitted by the STA. However, this embodiment is different from the conventional technology in that, although the data frame may be transmitted in response to the PS-Poll frame transmitted by the STA, if the data frame transmission time overlaps a specific time duration (e.g., the TBTT or RAW), the data frame may not be transmitted but only the ACK frame may be transmitted.

In addition, although the ACK frame may be transmitted in response to the PS-Poll frame after the SIFS (without performing CCA) as in the conventional technology, in order to prevent interruption of the time allocated by the AP for the special purpose (e.g., a TBTT or RAW), the AP may transmit, to the non-TIM STA, the ACK frame in response to the PS-Poll frame after performing CCA.

### Embodiment 2

In order to describe a second example of the present invention, assume that, when a non-TIM STA, which has performed CCA, transmits a PS-Poll frame or a trigger frame (e.g., a QoS null frame), the AP has data to be transmitted to the non-TIM STA but is not ready to transmit data and thus should transmit an ACK frame.

In this case, the AP may determine whether a transmission time of an ACK frame overlaps a time allocated by the AP for a special purpose (e.g., a TBTT or RAW). If these times overlap each other, the AP does not transmit the ACK frame. For example, if the time when the AP transmits the ACK frame in response to the PS-Poll frame or the trigger frame overlaps the TBTT, the AP transmits a beacon frame instead of the ACK frame.

### Embodiment 3

As a third example of the present invention, assume that a non-TIM STA, which has performed CCA, initiates a TXOP in order to transmit an uplink data frame.

The STA initiating the TXOP includes performing RTS/CTS operation, transmitting CTS-to-self, immediately transmitting data without RTS/CTS, etc., for example. Although RTS/CTS operation may be performed in order to check whether the channel is in an idle state before a certain STA transmits this frame, in order to reduce overhead of the RTS/CTS operation, a method of immediately transmitting data without RTS/CTS (that is, without checking the idle state of the channel) is also allowed. CTS-to-self is a method of transmitting low-rate data before transmitting data and may be a compromise between a method of performing RTS/CTS operation and a method of immediately transmitting data without RTS/CTS. Although the CTS-to-self method is used, the idle state of the channel may not be guaranteed as compared to the method of performing RTS/CTS operation.

The non-TIM STA may have TSF errors with the AP. Accordingly, when the non-TIM STA transmits CTS-to-self or transmits a data frame without RTS/CTS, the time allocated by the AP for the special purpose (e.g., the TBTT or RAW) within the BSS may not be protected. Accordingly, the non-TIM STA may perform RTS transmission and CTS reception as TXOP initiation operation in order to acquire the TXOP for transmitting an uplink data frame.

In addition, when the non-TIM STA transmits an RTS frame to initiate the TXOP, the AP may determine whether the duration of the TXOP initiated by the non-TIM STA overlaps the time allocated by the AP for the special purpose (e.g., the TBTT or RAW). The duration of the TXOP initiated by transmitting the RTS by the non-TIM STA may be determined by the value of the duration field of the RTS frame.

According to the conventional technology, the AP, which has received the RTS of the STA, always transmits the CTS frame as a response if the channel is in the idle state. However, the present invention is different from the conventional technology in that whether the CTS frame is transmitted as a response is determined depending on whether the duration of the TXOP initiated by the RTS of the STA overlaps a specific time duration or additional information is provided to the STA.

That is, the STA (or TIM STA) according to the conventional technology may receive the beacon to check the time allocated by the AP for the special purpose (e.g., the TBTT or RAW) and thus may initiate the TXOP so as not to include the time allocated by the AP for the special purpose but the non-TIM STA may not check the time allocated by the AP for the special purpose (e.g., the TBTT or RAW) and thus transmit RTS for initiating the TXOP without considering the time allocated by the AP for the special purpose. In the present invention, the AP, which has received RTS, may determine whether the CTS frame is transmitted as a response to determine whether the TXOP is allowed.

If the duration of the TXOP initiated by the non-TIM STA does not overlap the time allocated by the AP for the special purpose (e.g., the TBTT or RAW), the AP allows the TXOP of the non-TIM STA to be initiated in response to the CTS frame.

If the duration of the TXOP initiated by the non-TIM STA overlaps the time allocated by the AP for the special purpose (e.g., the TBTT or RAW), the AP may operate according to one of the following two methods.

### Embodiment 3-1

As a first method, the AP does not transmit the CTS frame as a response. That is, if the duration of the TXOP initiated by transmitting the RTS frame by the non-TIM STA overlaps the time allocated by the AP for the special purpose (e.g., the TBTT or RAW), the AP does not transmit the CTS frame in response to the RTS frame. In this case, the non-TIM STA, which has transmitted the RTS frame but has not received the CTS frame, may attempt channel access again via a backoff process.

Here, when the non-TIM STA, which has transmitted the RTS frame, does not receive the CTS frame, the non-TIM STA may transmit the RTS frame again. Although the time when the RTS frame is first transmitted does not overlap the time allocated by the AP for the special purpose (e.g., the TBTT or RAW), the time when the non-TIM STA, which does not receive the CTS frame, transmits the RTS frame may overlap the time allocated by the AP for the special purpose (e.g., the TBTT or RAW). In this case, beacon frame transmission and reception or RAW may be interrupted due to the RTS frame being repeatedly transmitted by the non-TIM STA. Accordingly, when the AP does not transmit the CTS frame in response to the RTS frame, necessary information may be provided such that the non-TIM STA, which has transmitted the RTS, can accurately perform channel access (that is, without interrupting other STAs).

If the duration of the TXOP initiated by the non-TIM STA overlaps the time allocated by the AP for the special purpose (e.g., the TBTT or RAW), the AP may transmit a channel access control frame (or a channel access control response frame) to the non-TIM STA when a predetermined time (e.g., an SIFS or a PCF interframe space (PIFS)) has elapsed after receiving the RTS from the non-TIM STA. The channel access control frame proposed by the present invention may include a deferred channel access time for waiting until channel access of the STA is allowed, a timestamp and system information change.

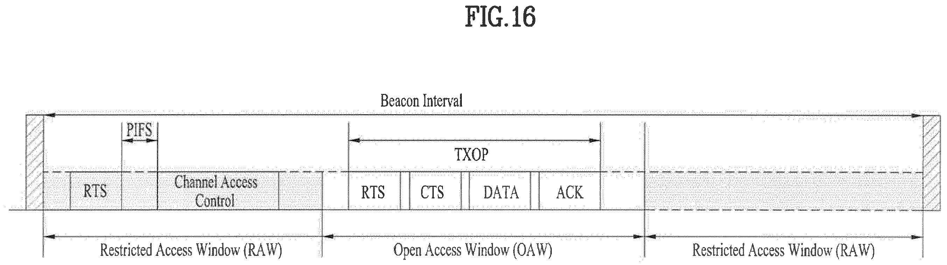

FIG. 16 is a diagram illustrating a method of controlling channel access according to an example of the present invention.

In FIG. 16, a RAW in which channel access of a non-TIM STA is restricted (that is, access of other STAs is restrictively allowed) is present. If the non-TIM STA transmits an RTS frame in the RAW, when the AP determines that the duration of the TXOP initiated by the RTS frame overlaps the RAW, the AP does not transmit the CTS frame (even when the channel is in the idle state). At this time, the AP may not transmit the CTS frame and instead may transmit the channel access control frame to the non-TIM STA when the PIFS has elapsed after receiving the RTS frame. Thus, the TXOP to be initiated by the transmitting the RTS by the non-TIM STA may be truncated. The non-TIM STA, which has received the channel access control frame, may determine a channel access allowance time based on information (e.g., deferred channel access time information) included in the channel access control frame and attempt channel access (e.g., transmit the RTS frame) again at the determined time. In the example of FIG. 16, the non-TIM STA, which has transmitted the RTS and has received the channel access control frame in response thereto after the PIFS during the first RAW, may set a TXOP in which RTS transmission, CTS reception, uplink data frame transmission and ACK reception are performed during an open access window (OAW).

### Embodiment 3-2

As a second method, the AP transmits the CTS as a response and notifies the STA as to whether the TXOP needs to be truncated via a specific field of the CTS. That is, if the duration of the TXOP initiated by transmitting the RTS frame by the non-TIM STA overlaps the time allocated by the AP for the special purpose (e.g., the TBTT or RAW), the AP may modify the value of the specific field of the CTS frame while transmitting the CTS frame to the non-TIM STA to indicate that the duration of the TXOP of the non-TIM STA overlaps the time allocated by the AP for the special purpose (e.g., the TBTT or RAW).

For example, when the AP transmits the CTS in response to the RTS frame of the non-TIM STA, if the value of the duration field of the CTS frame is set to a predetermined value (e.g., 0), the non-TIM STA, which has received the CTS, no longer transmits the data frame and immediately truncates the TXOP. That is, the duration field of the CTS frame may be set to a predetermined time to indicate that the TXOP of the STA, which has received the CTS, should be truncated.

In addition, even when the AP transmits the CTS frame having the duration field set to the predetermined value, the channel access control frame may be transmitted when a predetermined time (e.g., an SIFS or a PIFS) has elapsed after the CTS is transmitted. The non-TIM STA, which has received the CTS frame having the duration field set to the predetermined value, may confirm that the TXOP should be truncated and determine a channel access interval from the information included in the subsequently received channel access control frame.

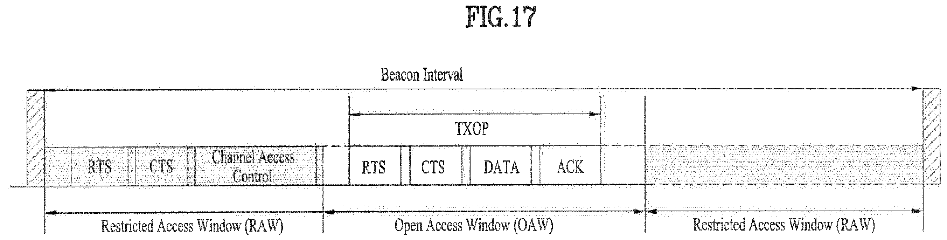

FIG. 17 is a diagram illustrating a method of controlling channel access according to another example of the present invention.

Unlike the example of FIG. 16 in which the channel access control frame is received when the PIFS has elapsed after the STA transmits the RTS in a first RAW interval, in the example of FIG. 17, the STA transmits the RTS frame, receives the CTS frame and then receives the channel access control frame. The AP determines that the duration of the TXOP initiated by the RTS transmitted by the non-TIM STA overlaps the RAW and thus may transmit the CTS frame having the duration field set to the predetermined value to the non-TIM STA in order to truncate the TXOP of the non-TIM STA. Thus, the non-TIM STA immediately truncates the TXOP. Here, the CTS frame may be transmitted when the SIFS has elapsed after the AP receives the RTS frame and the channel access control frame may be transmitted when the SIFS or the PIFS has elapsed after the AP transmits the CTS frame. The non-TIM STA, which has received the channel access control frame, may determine the channel access allowance time based on information (e.g., deferred channel access time information) included in the channel access control frame and attempt channel access (e.g., transmit the RTS frame) again at the determined time. In the example of FIG. 17, the non-TIM STA, which has transmitted the RTS and has received the CTS and the channel access control frame during the first RAW, may set a TXOP in which RTS transmission, CTS reception, uplink data frame transmission and ACK reception are performed during an open access window (OAW).

### Embodiment 3-3

As an additional example of the present invention, in a method of notifying the non-TIM STA, which has transmitted the RTS frame, of TXOP truncation by setting the value of the duration field of the CTS frame to the predetermined value, instead of 0, an a value indicating an allowable TXOP duration may be used as the predetermined value. That is, the AP, which has received the RTS frame from the non-TIM STA, may not set the value of the duration field of the CTS frame based on the value of the duration field of the RTS frame but may set the duration field of the CTS frame to a value indicating the duration of the TXOP allowable by the AP. More specifically, if the duration of the TXOP indicated via the duration field of the RTS frame by the non-TIM STA overlaps the time allocated by the AP for another purpose (e.g., the TBTT or RAW), the value of the duration field of the CTS frame may be set based on the time length of the time other than the overlapping time. Thus, the non-TIM STA may set the TXOP duration according to the duration field of the CTS frame and use the TXOP only during the duration.

In addition, the AP may transmit the channel access control frame when the SIFS or the PIFS has elapsed after the CTS frame is transmitted in order to notify the non-TIM STA of a more accurate channel access allowance time, after transmitting the CTS frame having the modified duration field value to the non-TIM STA as a response.

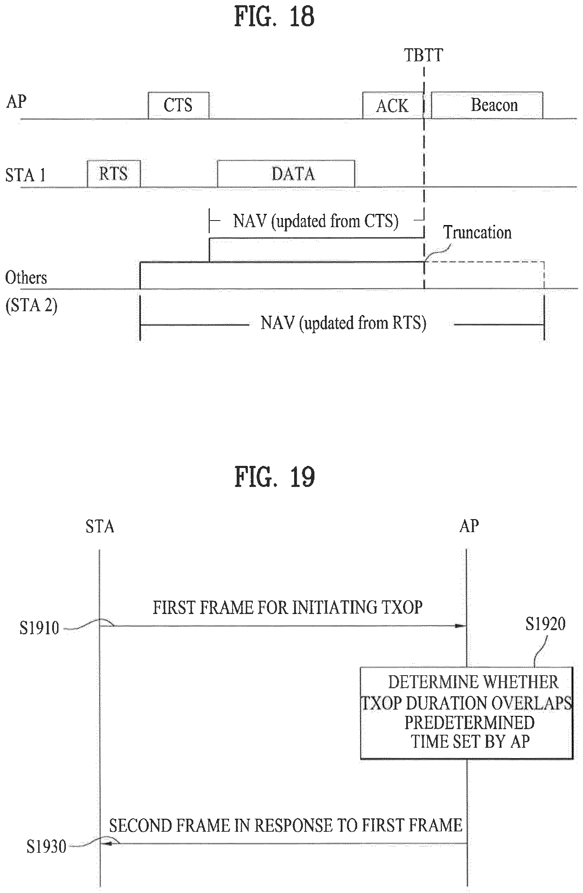

FIG. 18 is a diagram illustrating a method of controlling channel access according to another example of the present invention.

In the example, when STA1 (e.g., a non-TIM STA) transmits an RTS frame, other STAs including an AP and STA2 set an NAV based on the value of the duration field of the RTS frame. The length of the NAV set by the RTS is equal to the length of a TXOP of STA1. The AP, which has received the RTS of STA1, may transmit a CTS frame. At this time, the AP determines whether the duration of the TXOP indicated by the duration field of the RTS of STA1 overlaps the time allocated by the AP for the special purpose (e.g., the TBTT or RAW). In the example of FIG. 18, assume that the NAV set by the RTS overlaps the TBTT of the AP. Accordingly, the AP may set the value of the duration field of the CTS frame to a value indicating a time obtained by modifying the duration of the TXOP of STA1 in consideration of the TBTT (or a truncation time of the TXOP), when transmitting the CTS. Other STAs, which have received the CTS frame, may set that the NAV ends at the TBTT. That is, the duration of the TXOP of STA1 is truncated at the TBTT. The length of the NAV newly set by the CTS is equal to the modified TXOP duration allocated to STA1. Then, STA1 may perform uplink data transmission during the modified TXOP duration and receive an ACK frame. Although not shown in FIG. 18, the AP may transmit the channel access control frame to STA1 when the SIFS or PIFS has elapsed after transmitting the CTS frame.

### Embodiment 4

The above-described embodiments of the present invention relate to a method of controlling a TXOP initiation process of a non-TIM STA at an AP such that an additional problem is prevented from occurring when a primary problem occurs due to TSF errors of an STA. The embodiment additionally proposed by the present invention relates to a method of previously correcting TSF errors so as to prevent a primary problem from occurring due to TSF errors of an STA. A method of requesting non-TIM STAs to receive a beacon frame to correct TSF errors or to perform synchronization with important system information is proposed.

The AP may request to change the operation mode of the non-TIM STA to a mode for receiving a beacon and performing operation based on the beacon (that is, a TIM STA operation mode), by setting a power management (PM) bit of a frame control field of the frame transmitted to the non-TIM STA to a specific value. That is, the non-TIM STA, which has received a frame having a PM bit set to a specific value, no longer operates in the non-TIM STA mode but operates in the TIM STA mode.

For example, when the AP sets the value of the PM bit of the frame control field of the frame (e.g., an ACK frame, a CTS frame, etc.) transmitted to the non-TIM STA to 0, the non-TIM STA, which has received the frame, is allowed to operate without receiving the beacon frame (that is, is indicated to operate in the non-TIM STA mode). In contrast, when the AP sets the value of the PM bit of the frame (e.g., an ACK frame, a CTS frame, etc.) transmitted to the non-TIM STA to 1, the non-TIM STA, which has received the frame, is required to receive a next beacon and to operate based on the next beacon (that is, is indicated to operate in the TIM STA mode). If the STA operates in the TIM STA mode, the STA may receive the next beacon frame, acquire time synchronization information, system information, etc. included in the beacon frame, perform TSF synchronization, update system information and operate according to the updated system information.

FIG. 19 is a flowchart illustrating a method of controlling channel access according to an example of the present invention.

In step S1910, an STA may transmit a first frame for initiating a TXOP to an AP. As described with respect to the examples of the present invention, the first frame may be a PS-Poll frame or an RTS frame. The STA may be a non-TIM STA which is allowed to operate without checking a beacon of the AP.

Although not shown in FIG. 19, the first frame may be transmitted after the STA has been changed from a doze state to an awake state. More specifically, the first frame may be transmitted, after the STA in the awake state performs CCA to determine that a medium is in an idle state.

In step S1920, the AP may determine whether the TXOP to be initiated by the STA is allowed. More specifically, the AP may determine whether the duration of the TXOP of the STA overlaps a predetermined time (e.g., a TBTT or an RAW for another STA) set by the AP.

In step S1930, the AP may transmit a second frame to the STA in response to the first frame according to the determined result of step S1930.

If it is determined that the duration of the TXOP of the STA overlaps the predetermined time, the AP may truncate the TXOP of the STA and, otherwise, the AP may transmit a frame in response to the first frame (e.g., a data frame or ACK frame in response to a PS-Poll frame or a CTS frame in response to an RTS frame) according to a general method.

When the second frame for truncating the TXOP is transmitted, the following operation may be performed. If the PS-Poll frame is transmitted as the first frame, even when there is data to be transmitted in response to the PS-Poll frame, the AP may transmit an ACK frame as the second frame (see Embodiment 1) or transmit a beacon frame at the TBTT without transmitting the data frame or the ACK frame (see Embodiment 2). If the RTS frame is transmitted as the first frame, the AP may transmit a channel access control frame without transmitting a CTS frame as the second frame (see Embodiment 3-1) or transmit the CTS frame as the second frame, set the duration field of the CTS frame to a specific value (e.g., 0) and transmit the channel access control frame (see Embodiment 3-2) or transmit the CTS frame as the second frame, set the duration field of the CTS frame to a value indicating a duration less than the TXOP duration, and transmit the channel access control frame (see Embodiment 3-3). Additionally, the AP may enable the non-TIM STA to operate in the TIM STA mode (e.g., set the PM bit of the second frame to a specific value) in order to solve collision between the TXOP by the non-TIM STA and the TBTT/RAW.

In the method of controlling channel access according to the present invention shown in FIG. 19, details described in the above embodiments of the present invention may be independently applied or two or more embodiments may be simultaneously applied.

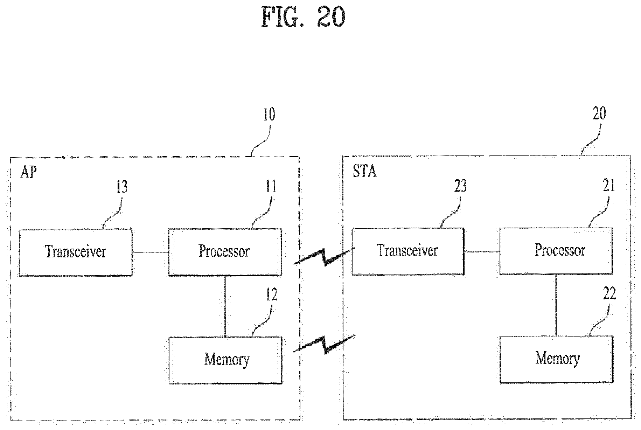

FIG. 20 is a block diagram showing the configuration of a wireless apparatus according to one embodiment of the present invention.

The AP 10 may include a processor 11, a memory 12 and a transceiver 13. The STA 20 may include a processor 21, a memory 22 and a transceiver 23. The transceivers 13 and 23 may transmit/receive a radio frequency (RF) signal and implement a physical layer according to an IEEE 802 system, for example. The processors 11 and 21 may be respectively connected to the transceivers 13 and 21 to implement a physical layer and/or an MAC layer according to the IEEE 802 system. The processors 11 and 21 may be configured to perform operation according to the above-described various embodiments of the present invention. In addition, modules implementing operations of the AP and the STA according to the above-described embodiments of the present invention may be stored in the memories 12 and 22 and may be executed by the processors 11 and 21, respectively. The memories 12 and 22 may be mounted inside or outside the processors 11 and 21 to be connected to the processors 11 and 21 by known means, respectively.

The detailed configuration of the AP and the STA apparatus may be implemented such that details described in the above embodiments of the present invention is independently applied or two or more embodiments are simultaneously applied. In this case, overlapping details will be omitted from the description for clarity.

The above-described embodiments of the present invention can be implemented by a variety of means, for example, hardware, firmware, software, or a combination of them.

In the case of implementing the present invention by hardware, the present invention can be implemented with application specific integrated circuits (ASICs) , Digital signal processors (DSPs), digital signal processing devices (DSPDs), programmable logic devices (PLDs), field programmable gate arrays (FPGAs), a processor, a controller, a microcontroller, a microprocessor, etc.

If operations or functions of the present invention are implemented by firmware or software, the present invention can be implemented in the form of a variety of formats, for example, modules, procedures, functions, etc. The software codes may be stored in a memory unit so that it can be driven by a processor. The memory unit is located inside or outside of the processor, so that it can communicate with the aforementioned processor via a variety of well-known parts.

The detailed description of the exemplary embodiments of the present invention has been given to enable those skilled in the art to implement and practice the invention. Although the invention has been described with reference to the exemplary embodiments, those skilled in the art will appreciate that various modifications and variations can be made in the present invention without departing from the scope of the invention described in the appended claims. For example, those skilled in the art may use each construction described in the above embodiments in combination with each other. Accordingly, the invention should not be limited to the specific embodiments described herein, but should be accorded the broadest scope consistent with the principles and novel features disclosed herein.

### [Industrial Applicability]

Although the above various embodiments of the present invention have been described based upon an IEEE 802.11 system, the embodiments may be applied in the same manner to various mobile communication systems.

## Claims

1. A method of controlling channel access at a station, hereinafter STA, operating as a non-traffic indication map STA, hereinafter non-TIM STA, which is allowed not to check a beacon frame from an access point, hereinafter AP, of a wireless communication system, the method comprising:
transmitting a first frame (S1910) for initiating a transmission opportunity, hereinafter TXOP, to the AP, wherein the first frame includes information on a duration of the TXOP; and
receiving a second frame (S1930) in response to the first frame from the AP,
wherein the second frame includes a duration field set to a predetermined value,
wherein the predetermined value modifies the duration of the TXOP indicated by the first frame and is set to a time period up to a target beacon transmission time, hereinafter TBTT, if the duration of the TXOP overlaps a predetermined time set by the AP (S1920), and
wherein the non-Tim STA switches to a traffic indication map, hereinafter TIM, STA and receives a beacon frame from the AP from the TBTT, when the AP sets the non-TIM STA as the TIM STA from the TBTT.

2. The method according to claim 1, wherein the first frame is transmitted when a medium is determined to be in an idle state after the STA has changed from a doze state to an awake state.

3. A method of controlling channel access of a station, hereinafter, STA, operating as a non-traffic indication map STA, hereinafter non-TIM STA, which is allowed not to check a beacon frame from an access point, hereinafter AP, at the AP of a wireless communication system, the method comprising:
receiving a first frame (S1910) for initiating a transmission opportunity, hereinafter TXOP, of the STA from the STA, wherein the first frame includes information on a duration of the TXOP;
transmitting a second frame (S1930) in response to the first frame to the STA,
wherein the second frame includes a duration field set to a predetermined value, and
wherein the predetermined value modifies the duration of the TXOP indicated by the first frame and is set to a time period up to a target beacon transmission time, hereinafter TBTT, if the duration of the TXOP overlaps a predetermined time set by the AP (S1920), and
setting the non-TIM STA as a traffic indication map, hereinafter TIM, STA to receive a beacon frame from the AP from the TBTT.

4. A station, hereinafter STA, apparatus (20) operating as a non-traffic indication map STA, hereinafter non-TIM STA, which is allowed not to check a beacon frame from an access point, hereinafter AP, and controlling channel access in a wireless communication system, the STA apparatus comprising:
a transceiver (23) and
a processor (21),
wherein the processor (21) is configured to transmit a first frame for initiating a transmission opportunity, hereinafter TXOP, to the AP using the transceiver and to receive a second frame in response to the first frame from the AP using the transceiver,
wherein the first frame includes information on a duration of the TXOP,
wherein the second frame includes a duration field set to a predetermined value,
wherein the predetermined value modifies the duration of the TXOP indicated by the first frame and is set to a time period up to a target beacon transmission time, hereinafter TBTT, if the duration of the TXOP overlaps a predetermined time set by the AP, and
wherein the non-Tim STA is configured to switch to a traffic indication map, hereinafter TIM, STA and receives a beacon frame from the AP from the TBTT, when the AP sets the non-TIM STA as the TIM STA from the TBTT.

5. An access point, hereinafter AP, apparatus (10) for controlling channel access of a station, hereinafter STA, operating as a non-traffic indication map STA, hereinafter non-TIM STA, which is allowed not to check a beacon frame from the AP, in a wireless communication system, the STA apparatus comprising:
a transceiver (13) and
a processor (11),
wherein the processor (11) is configured to receive a first frame for initiating a transmission opportunity, hereinafter TXOP, of the STA from the STA using the transceiver and to transmit a second frame in response to the first frame to the STA using the transceiver,
wherein the first frame includes information on a duration of the TXOP,
wherein the second frame includes a duration field set to a predetermined value,
wherein the predetermined value modifies the duration of the TXOP indicated by the first frame and is set to a time period up to a target beacon transmission time, hereinafter TBTT, if the duration of the TXOP overlaps a predetermined time set by the AP, and
wherein the processor (11) is configured to set the non-TIM STA as a traffic indication map, hereinafter TIM, STA to receive a beacon frame from the AP from the TBTT.

## Patentansprüche

1. Verfahren zum Steuern des Kanalzugriffs bei einer Station, im Folgenden STA, die als eine Nicht-Verkehrsanzeigekarte STA, im Folgenden Nicht-TIM-STA, arbeitet, die einen Beacon-Rahmen von einem Zugangspunkt, im Folgenden AP, eines drahtlosen Kommunikationssystems nicht überprüfen darf, wobei das Verfahren umfasst:
Übertragen (S1910) eines ersten Rahmens zum Initiieren einer Übertragungsgelegenheit, im Folgenden TXOP, zu dem AP, wobei der erste Rahmen Informationen über eine Dauer der TXOP enthält; und
Empfangen (S1930) eines zweiten Rahmens als Reaktion auf den ersten Rahmen von dem AP,
wobei der zweite Rahmen ein Dauerfeld enthält, das auf einen vorbestimmten Wert eingestellt ist,
wobei der vorbestimmte Wert die Dauer der TXOP modifiziert, die durch den ersten Rahmen angezeigt ist, und auf eine Zeitdauer bis zu einer Ziel-Beacon-Übertragungszeit, im Folgenden TBTT, eingestellt ist, wenn die Dauer der TXOP eine vorbestimmte Zeit überlappt, die durch den AP eingestellt ist (S1920), und
wobei die Nicht-Tim-STA zu einer Verkehrsanzeigekarte, im Folgenden TIM, STA, wechselt und einen Beacon-Rahmen von dem AP ab der TBTT empfängt, wenn der AP die Nicht-TIM-STA als die TIM STA ab der TBTT einstellt.

2. Verfahren nach Anspruch 1, wobei der erste Rahmen übertragen wird, wenn bestimmt ist, dass ein Medium in einem Ruhezustand ist, nachdem sich die STA von einem Schlummerzustand in einen Wachzustand geändert hat.

3. Verfahren zum Steuern des Kanalzugriffs bei einer Station, im Folgenden STA, die als eine Nicht-Verkehrsanzeigekarte STA, im Folgenden Nicht-TIM-STA, arbeitet, die einen Beacon-Rahmen von einem Zugangspunkt, im Folgenden AP, bei dem Zugangspunkt eines drahtlosen Kommunikationssystems nicht überprüfen darf, wobei das Verfahren umfasst:
Empfangen (S1910) eines ersten Rahmens zum Initiieren einer Übertragungsgelegenheit, im Folgenden TXOP, der STA von der STA, wobei der erste Rahmen Informationen über eine Dauer der TXOP enthält;
Übertragen (S1930) eines zweiten Rahmens als Reaktion auf den ersten Rahmen an die STA,
wobei der zweite Rahmen ein Dauerfeld enthält, das auf einen vorbestimmten Wert eingestellt ist, und
wobei der vorbestimmte Wert die Dauer der TXOP modifiziert, die durch den ersten Rahmen angezeigt ist, und auf eine Zeitdauer bis zu einer Ziel-Beacon-Übertragungszeit, im Folgenden TBTT, eingestellt ist, wenn die Dauer der TXOP eine vorbestimmte Zeit überlappt, die durch den AP eingestellt ist (S1920); und
Einstellen der Nicht-Tim-STA als eine Verkehrsanzeigekarte, im Folgenden TIM, STA, zum Empfangen eines Beacon-Rahmens von dem AP ab der TBTT.

4. Station, im Folgenden STA, Vorrichtung (20), die als eine Nicht-Verkehrsanzeigekarte STA arbeitet, im Folgenden Nicht-TIM-STA, die einen Beacon-Rahmen von einem Zugangspunkt, im Folgenden AP, nicht überprüfen darf, und den Kanalzugriff in einem drahtlosen Kommunikationssystem steuert, wobei die STA Vorrichtung umfasst:
ein Sende- und Empfangsgerät (23), und
einen Prozessor (21),
wobei der Prozessor (21) konfiguriert ist zum Übertragen eines ersten Rahmens zum Initiieren einer Übertragungsgelegenheit, im Folgenden TXOP, zu dem AP unter Verwendung des Sende- und Empfangsgeräts und zum Empfangen eines zweiten Rahmens als Reaktion auf den ersten Rahmen von dem AP unter Verwendung des Sende- und Empfangsgeräts,
wobei der erste Rahmen Informationen über eine Dauer der TXOP enthält,
wobei der zweite Rahmen ein Dauerfeld enthält, das auf einen vorbestimmten Wert eingestellt ist,
wobei der vorbestimmte Wert die Dauer der TXOP modifiziert, die durch den ersten Rahmen angezeigt ist, und auf eine Zeitdauer bis zu einer Ziel-Beacon-Übertragungszeit, im Folgenden TBTT, eingestellt ist, wenn die Dauer der TXOP eine vorbestimmte Zeit überlappt, die durch den AP eingestellt ist, und
wobei die Nicht-Tim-STA konfiguriert ist zu einer Verkehrsanzeigekarte, im Folgenden TIM, STA, zu wechseln und einen Beacon-Rahmen von dem AP ab der TBTT zu empfangen, wenn der AP die Nicht-TIM-STA als die TIM STA ab der TBTT einstellt.

5. Zugangspunkt, im Folgenden AP, Vorrichtung zum Steuern des Kanalzugriffs einer Station, im Folgenden STA, die als eine Nicht-Verkehrsanzeigekarte STA arbeitet, im Folgenden Nicht-TIM-STA, die einen Beacon-Rahmen von dem AP nicht überprüfen darf, in einem drahtlosen Kommunikationssystem, wobei die STA Vorrichtung umfasst:
ein Sende- und Empfangsgerät (13); und
einen Prozessor (11),
wobei der Prozessor (11) konfiguriert ist zum Empfangen eines ersten Rahmens zum Initiieren einer Übertragungsgelegenheit, im Folgenden TXOP, der STA von der STA unter Verwendung des Sende- und Empfangsgeräts und zum Übertragen eines zweiten Rahmens als Reaktion auf den ersten Rahmen an die STA unter Verwendung des Sende- und Empfangsgeräts,
wobei der erste Rahmen Informationen über eine Dauer der TXOP enthält;
wobei der zweite Rahmen ein Dauerfeld enthält, das auf einen vorbestimmten Wert eingestellt ist, und
wobei der vorbestimmte Wert die Dauer der TXOP modifiziert, die durch den ersten Rahmen angezeigt ist, und auf eine Zeitdauer bis zu einer Ziel-Beacon-Übertragungszeit, im Folgenden TBTT, eingestellt ist, wenn die Dauer der TXOP eine vorbestimmte Zeit überlappt, die durch den AP eingestellt ist (S1920), und
wobei der Prozessor (11) konfiguriert ist zum Einstellen der Nicht-Tim-STA als eine Verkehrsanzeigekarte, im Folgenden TIM, STA, zum Empfangen eines Beacon-Rahmens von dem AP ab der TBTT.

## Revendications

1. Procédé de commande d'accès au canal au niveau d'une station, qu'on appellera par la suite STA, fonctionnant en tant que STA carte d'indication de non-trafic, qu'on appellera par la suite non-TIM STA, qui est autorisée à ne pas contrôler une trame de balise à partir d'un point d'accès, qu'on appellera par la suite AP, d'un système de communication sans fil, le procédé comprenant :
la transmission d'une première trame (S1910) pour initier une opportunité de transmission, qu'on appellera par la suite TXOP, à l'AP, dans lequel la première trame comprend des informations de durée de la TXOP ; et
la réception d'une deuxième trame (S1930) en réponse à la première trame depuis l'AP,
dans lequel la deuxième trame comprend un champ de durée établi à une valeur prédéterminée,
dans lequel la valeur prédéterminée modifie la durée de la TXOP indiquée par la première trame et est établie à une période de temps jusqu'à un temps de transmission de balise cible, qu'on appellera par la suite TBTT, si la durée de la TXOP chevauche un temps prédéterminé établi par l'AP (S1920), et
dans lequel la non-TIM STA commute vers une STA carte d'indication de trafic, qu'on appellera par la suite TIM, et reçoit une trame de balise de l'AP à partir du TBTT, lorsque l'AP établit la non-TIM STA en tant que TIM STA à partir du TBTT.

2. Procédé selon la revendication 1, dans lequel la première trame est transmise lorsqu'un support est déterminé comme se trouvant dans un état de ralenti après que la STA a changé d'un état de sommeil à un état éveillé.

3. Procédé de commande d'accès au canal d'une station, qu'on appellera par la suite STA, fonctionnant en tant que STA carte d'indication de non-trafic, qu'on appellera par la suite non-TIM STA, qui est autorisée à ne pas contrôler une trame de balise à partir d'un point d'accès, qu'on appellera par la suite AP, au niveau de l'AP d'un système de communication sans fil, le procédé comprenant :
la réception d'une première trame (S1910) pour initier une opportunité de transmission, qu'on appellera par la suite TXOP, de la STA depuis la STA, dans lequel la première trame comprend des informations sur une durée de la TXOP ;
la transmission d'une deuxième trame (S1930) en réponse à la première trame à la STA,
dans lequel la deuxième trame comprend un champ de durée établi à une valeur prédéterminée, et
dans lequel la valeur prédéterminée modifie la durée de la TXOP indiquée par la première trame et est établie à une période de temps jusqu'à un temps de transmission de balise cible, qu'on appellera par la suite TBTT, si la durée de la TXOP chevauche un temps prédéterminé établi par l'AP (S1920), et
établir la non-TIM STA en tant que STA carte d'indication de trafic, qu'on appellera par la suite TIM, pour recevoir une trame de balise de l'AP à partir du TBTT.

4. Appareil station, qu'on appellera par la suite STA, (20) fonctionnant en tant que STA carte d'indication de non-trafic, qu'on appellera par la suite non-TIM STA, qui est autorisée à ne pas contrôler une trame de balise à partir d'un point d'accès, qu'on appellera par la suite AP, et commandant un accès au canal dans un système de communication sans fil, l'appareil STA comprenant :
un émetteur-récepteur (23), et
un processeur (21),
dans lequel le processeur (21) est configuré pour transmettre une première trame pour initier une opportunité de transmission, qu'on appellera par la suite TXOP, à l'AP, en utilisant l'émetteur-récepteur et pour recevoir une deuxième trame en réponse à la première trame depuis l'AP en utilisant l'émetteur-récepteur,
dans lequel la première trame comprend des informations de durée de la TXOP,
dans lequel la deuxième trame comprend un champ de durée établi à une valeur prédéterminée,
dans lequel la valeur prédéterminée modifie la durée de la TXOP indiquée par la première trame et est établie à une période de temps jusqu'à un temps de transmission de balise cible, qu'on appellera par la suite TBTT, si la durée de la TXOP chevauche un temps prédéterminé établi par l'AP, et
dans lequel la non-TIM STA est configurée pour basculer vers une STA carte d'indication de trafic, qu'on appellera par la suite TIM, et reçoit une trame de balise de l'AP à partir du TBTT, lorsque l'AP établit la non-TIM STA en tant que TIM STA à partir du TBTT.

5. Appareil point d'accès, qu'on appellera par la suite AP, (10) destiné à commander un accès au canal d'une station, qu'on appellera par la suite STA, fonctionnant en tant que STA carte d'indication de non-trafic, qu'on appellera par la suite non-TIM STA, qui est autorisée à ne pas contrôler une trame de balise à partir de l'AP, dans un système de communication sans fil, l'appareil STA comprenant :
un émetteur-récepteur (13), et
un processeur (11),
dans lequel le processeur (11) est configuré pour recevoir une première trame pour initier une opportunité de transmission, qu'on appellera par la suite TXOP, de la STA depuis la STA, en utilisant l'émetteur-récepteur et pour transmettre une deuxième trame en réponse à la première trame à la STA en utilisant l'émetteur-récepteur,
dans lequel la première trame comprend des informations de durée de la TXOP,
dans lequel la deuxième trame comprend un champ de durée établi à une valeur prédéterminée,
dans lequel la valeur prédéterminée modifie la durée de la TXOP indiquée par la première trame et est établie à une période de temps jusqu'à un temps de transmission de balise cible, qu'on appellera par la suite TBTT, si la durée de la TXOP chevauche un temps prédéterminé établi par l'AP, et
dans lequel le processeur (11) est configuré pour établir la non-TIM STA en tant que STA carte d'indication de trafic, qu'on appellera par la suite TIM, pour recevoir une trame de balise de l'AP à partir du TBTT.
